(19) Europäisches Patentamt
European Patent Office
Office européen des brevets

(11) **EP 1 965 533 B1**

(12) **FASCICULE DE BREVET EUROPEEN**

(45) Date de publication et mention de la délivrance du brevet:
**26.08.2009 Bulletin 2009/35**

(51) Int Cl.:
*H04L 1/00* *(2006.01)*    *H04L 1/06* *(2006.01)*

(21) Numéro de dépôt: **08151940.7**

(22) Date de dépôt: **26.02.2008**

(54) **Décodeur à maximum de vraisemblance pour système multi-utilisateur à modulation de position d'impulsion et d'amplitude**

Maximum-Likelihood-Decoder für ein System mit mehreren Benutzern welches eine Amplituden- und Pulspositionsmodulation verwendet

Maximium-Likelihood decoder for a multi-user system using pulse position and amplitude modulation

(84) Etats contractants désignés:
**DE ES FI GB SE**

(30) Priorité: **27.02.2007 FR 0753532**

(43) Date de publication de la demande:
**03.09.2008 Bulletin 2008/36**

(73) Titulaire: **COMMISSARIAT A L'ENERGIE ATOMIQUE**
**75015 Paris (FR)**

(72) Inventeur: **Abou Rjeily, Chadi,**
**Lebanese American University**
**Faculty of Engineering & Architecture**
**Byblos (LB)**

(74) Mandataire: **Augarde, Eric**
**Brevalex**
**56 Boulevard de l'Embouchure,**
**Bât. B**
**B.P. 27519**
**31075 Toulouse Cedex 2 (FR)**

(56) Documents cités:
- **CHADI ABOU-RJEILY ET AL: "SPACE-TIME CODING FOR MULTIUSER ULTRA-WIDEBAND COMMUNICATIONS" INTERNET CITATION, [Online] 13 septembre 2005 (2005-09-13), XP008071459 Extrait de l'Internet: URL:http://www.comelec.enst.fr/~belfiore/U WB_MIMO.pdf> [extrait le 2006-11-15]**
- **CAIRE G ET AL: "On maximum-likelihood detection and the search for the closest lattice point" IEEE TRANSACTIONS ON INFORMATION THEORY, IEEE SERVICE CENTER, PISCATAWAY, NJ, US, vol. 49, no. 10, octobre 2003 (2003-10), pages 2389-2402, XP011102229 ISSN: 0018-9448**
- **ABOU-RJEILY, DANIELE, BELFIORE: "MIMO UWB Communications using Modified Hermite Pulses" THE 17TH ANNUAL IEEE INTERNATIONAL SYMPOSIUM ON PERSONAL, INDOOR AND MOBILE RADIO COMMUNICATIONS (PIMRC'06), 2006, pages 1-5, XP002456994**

**Description**

**DOMAINE TECHNIQUE**

La présente invention concerne le domaine du décodage à maximum de vraisemblance, plus particulièrement pour un système multi-source utilisant une modulation hybride de position d'impulsion et d'amplitude.

**ÉTAT DE LA TECHNIQUE ANTÉRIEURE**

Les récepteurs utilisant un critère de maximum de vraisemblance, dénommés aussi récepteurs ML *(Maximum Likelihood)* sont bien connus dans le domaine des télécommunications pour être optimaux lorsque le canal de transmission est gaussien. On trouvera par exemple une description de ces récepteurs dans l'ouvrage de J.G. Proakis intitulé « Digital communications », 4ième édition, pages 242-247. Les récepteurs à maximum de vraisemblance ont été notamment envisagés dans le domaine des télécommunications mobiles. Afin d'éliminer l'interférence multi-accès ou MAI *(Multi Access Interference),* on peut recourir à un récepteur ML capable de décoder simultanément les symboles émis par les différents utilisateurs sur le canal de transmission (récepteur ML multi-utilisateur). On peut montrer que l'estimation des symboles transmis par ces utilisateurs selon le critère du maximum de vraisemblance revient à rechercher parmi les points d'un réseau celui qui est le plus proche d'un point représentatif du signal reçu dans un espace de dimension $M^K$ où $M$ est la dimensionnalité de la modulation utilisée par les $K$ utilisateurs. Le réseau de points est généré par les constellations de modulation des différents utilisateurs. Cette méthode s'avère rapidement complexe pour $K$ élevé aussi recourt-on classiquement à un décodage dit « par sphère » qui limite la recherche du plus proche voisin aux points du réseau appartenant à une boule de bruit centrée sur le point reçu. On trouvera une description du décodeur par sphère dans l'article d'E. Viterbo et al. intitulé « A universal lattice code decoder for fading channels » publié dans IEEE Transactions on Information Theory, vol. 45, pages 1639-1642, Juillet 1999. Le décodage par sphère a été appliqué à des systèmes utilisant des constellations de modulation de type PAM ou QAM. Plus récemment, le décodage par sphère a été proposé pour un système de télécommunication multi-utilisatéur utilisant un alphabet de modulation PPM-PAM, comme décrit dans l'article de C. Abou-Rjeily et al. intitulé « Space-time coding for multiuser ultra-wideband communications » publié dans IEEE Trans. on Comm. Vol. 54, N˚ 11, Nov. 2006 pp. 1960 - 1972.

Le décodage par sphère a encore été proposé pour la réalisation de récepteurs de systèmes MIMO (*Multiple Input Multiple Output).* On entend par système MIMO un système de télécommunication dans lequel au moins un émetteur transmet des symboles d'information au moyen d'une pluralité d'antennes. Le récepteur peut posséder une seule antenne (on parle alors plus particulièrement de système MISO, acronyme de *Multiple Input Single Output)* ou une pluralité d'antennes, le terme MIMO étant choisi ici pour désigner indifféremment ces deux configurations.

Dans le cas d'un système MIMO, le réseau de points est généré par les constellations de modulation utilisées pour transmettre les symboles par les différentes antennes. On trouvera un exemple de réalisation de décodage par sphère pour système MIMO dans l'article de M.O. Damen et al. intitulé « On Maximum-Likelihood detection and the search for the closest lattice point » publié dans IEEE Trans. on Information Theory, Vol. 49, N˚ 10, Oct. 2003, pages 2389-2402. Dans ce décodeur par sphère, seules des modulations PAM et QAM sont envisagées.

Dans la suite nous désignerons par le terme générique multi-source aussi bien une configuration multi-utilisateur qu'une configuration MIMO. On comprendra que dans le premier cas les sources représentent les flux de symboles des ou à destination des différents utilisateurs et, dans le second cas, les flux de symboles émis par les différentes antennes. Bien entendu ces deux cas peuvent être combinés lorsque les terminaux des utilisateurs sont de type multi-antenne. Nous supposerons par ailleurs que les flux de symboles sont synchrones.

Le récepteur ML à décodage par sphère sera décrit dans le cas de $K$ utilisateurs, chaque utilisateur $k \in \{1,..,$

$K\}$ transmettant à l'aide de $i_k$ antennes à destination du récepteur, soit un nombre total de $P = \sum_{k=1}^{K} i_k$ sources. Le signal reçu peut être exprimé sous la forme vectorielle :

$$\mathbf{x} = \mathbf{Ha} + \mathbf{n} \qquad\qquad (1)$$

où :

**x** est un vecteur de variables de décision de dimension $P'$ où $P'$ est égal au produit du nombre d'antennes du récepteur avec le nombre de variables de décision observées par antenne de réception, par exemple le nombre de trajets résolus par antenne.

**a** est un vecteur de taille *PM,* obtenu par la concaténation de vecteurs **a**$^{(1)}$,**a**$^{(2)}$,..,**a**$^{(P)}$, chaque vecteur **a**$^{(p)}$, $p \in \{1,..,P\}$ étant la représentation vectorielle du symbole d'information transmis par la $p^{ième}$ source et étant de dimension *M* égale à la dimensionnalité de la modulation utilisée ;

**H** est la matrice de taille $P' \times PM$ représentant le canal de transmission, elle décrit notamment les interférences entre utilisateurs et entre trajets issus des différentes antennes ;

**n** est un vecteur de dimension *P'* dont les composantes sont des échantillons de bruit blanc centré additif gaussien affectant le signal reçu.

Le récepteur à maximum de vraisemblance estime le vecteur **â** minimisant l'écart quadratique $\|\mathbf{X} - \mathbf{Ha}\|^2$ avec le vecteur reçu, soit :

$$\hat{\mathbf{a}} = \arg\min_{\mathbf{a} \in C^P} \|\mathbf{x} - \mathbf{Ha}\|^2 \qquad (2)$$

où $C^P$ est la constellation produit des constellations respectives des *P* sources.

On peut montrer que l'expression (2) peut s'écrire de manière équivalente :

$$\hat{\mathbf{a}} = \arg\min_{\mathbf{a} \in C^P} \|\mathbf{z} - \mathbf{Ra}\|^2 \qquad (3)$$

avec $\mathbf{z} = \mathbf{Q}^T{}_{\mathbf{X}}$ et

où **Q** et **R** sont respectivement une matrice unitaire de taille $P' \times P$ et une matrice triangulaire supérieure de taille $P \times P$ obtenue par décomposition QR de la matrice **H**, c'est-à-dire $\mathbf{R}^T\mathbf{R} = \mathbf{H}^T\mathbf{H}$.

Pour des constellations PAM ou QAM, il est toujours possible, au moyen d'une opération linéaire élémentaire $\ell$, dont nous ferons par la suite abstraction, de se ramener au cas où les points de la constellation produit sont de éléments de $Z^{MP}$ où *Z* est l'ensemble des entiers relatifs et *M* la dimensionnalité des constellations de modulation. Les vecteurs **Ra** peuvent alors être représentés comme les points d'un réseau $\Lambda$ de matrice génératrice **R**.

Le décodage par sphère consiste à faire une recherche de plus proche voisin au sein d'une boule (dans un espace de dimension *MP*) centrée sur le point représentatif du signal reçu z. La recherche est effectuée parmi les points de $\Lambda$ compris au sein de cette boule.

La manière dont les candidats sont successivement sélectionnés (ou énumérés) est critique pour les performances de l'algorithme de décodage. On connaît essentiellement deux techniques d'énumération, la première dite de Pohst, la seconde dite de Schnorr-Euchner.

Nous décrirons tout d'abord un décodage par sphère utilisant une énumération de Pohst.

On supposera pour les besoins d'illustration que la modulation est de type PAM, c'est-à-dire que l'espace considéré est de dimension *P*. Il s'applique également à une modulation QAM, la dimension de l'espace étant alors 2*P*.

La recherche est effectuée, dimension par dimension, ou selon la terminologie usuelle, couche par couche, en sélectionnant dans chaque couche la coordonnée d'un point candidat de $\Lambda$.

La contribution de la couche *P* à la distance quadratique (3) vaut simplement :

$$\left(z_P - r_{P,P}a_P\right)^2 \qquad (4)$$

De même la contribution de la couche *P*-1 à cette distance quadratique s'écrit :

$$\left(z_P - r_{P-1,P-1}a_{P-1} - r_{P-1,P}a_P\right)^2 \qquad (5)$$

et, de manière générale, la contribution de la couche *i* s'exprime par :

$$\left(z_i - r_{i,i}a_i - E_i\right)^2 \qquad\qquad (6)$$

avec $E_i$ défini par $E_i = \displaystyle\sum_{j=i+1}^{P} r_{i,j}a_j$ . Si l'on désigne par $T_i$, la contribution des couches successives $i+1,...,P$, celle-ci peut être obtenue par récurrence descendante :

$$T_{i-1} = T_i + \left|z_i - E_i - r_{i,i}a_i\right|^2 \qquad\qquad (7)$$

avec $T_p = 0$.

Avec les conventions précédentes la recherche dans la sphère de rayon quadratique $d$ revient à déterminer pour chacune des couches les valeurs $a_i$ de $Z$ vérifiant :

$$\left(z_i - r_{i,i}a_i - E_i\right)^2 + T_i \le d \qquad \text{pour} \quad i = P,..,1 \qquad\qquad (8)$$

ou, de manière équivalente :

$$\frac{z_i - E_i - \sqrt{d - T_i}}{r_{i,i}} \le a_i \le \frac{z_i - E_i + \sqrt{d - T_i}}{r_{i,i}} \qquad\qquad (9)$$

Finalement, si la constellation PAM est d'ordre $M'$ où $M'$ est une puissance de 2 et si la transformation linéaire précitée est $\ell(m')=2m'-1-M'$ pour $m' \in \{1,..,M'\}$, la recherche peut être réduite aux entiers impairs appartenant à l'intervalle $[A_i,B_i]$ où :

$$A_i = \max\left(1 - M', \left\lceil \frac{z_i - E_i - \sqrt{d - T_i}}{r_{i,i}} \right\rceil\right)$$

et

$$B_i = \min\left(M' - 1, \left\lfloor \frac{z_i - E_i + \sqrt{d - T_i}}{r_{i,i}} \right\rfloor\right) \qquad\qquad (10)$$

où $\lceil x \rceil$ est le plus petit entier supérieur à $x$ et $\lfloor x \rfloor$ est le plus grand entier inférieur à $x$.

Cette réduction de l'intervalle de recherche correspond en fait à une intersection de l'intervalle tel que défini en (9), avec la projection de la constellation sur la dimension en question.

Un intervalle de validité est ainsi défini pour chaque couche. Il donne l'excursion maximale admissible dans cette couche, compte tenu du choix déjà fait pour les valeurs $a_i$ dans les couches supérieures.

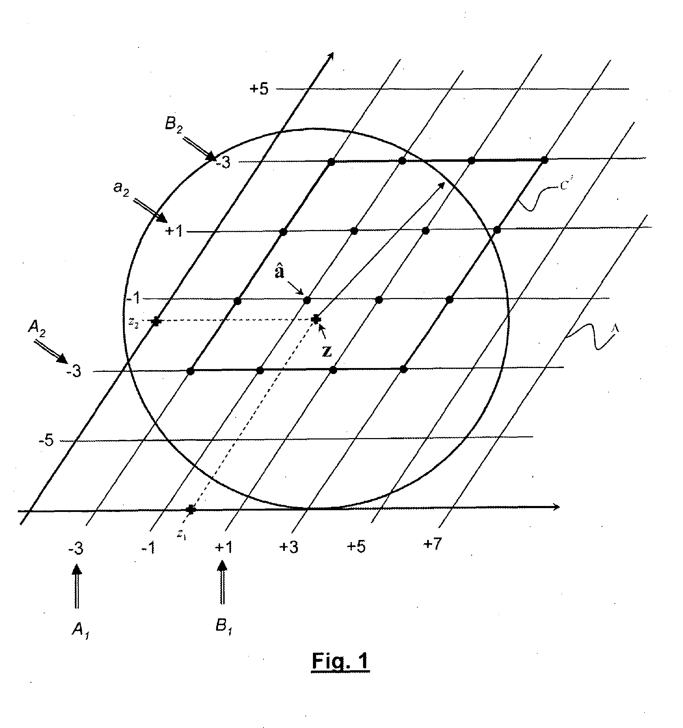

La Fig. 1 représente le principe du décodeur par sphère dans le cas simple où $P=2$ et $M'=4$. La sphère est centrée sur le point **z** représenté par une croix. Les points de la constellation produit $C^2$ sont représentés par des cercles pleins. L'intervalle de validité $[A_2,B_2]$ de la couche 2 n'est autre que l'intersection de la projection de la sphère avec celle de la constellation, ici $[A_2,B_2]=[-3,3]$. L'intervalle de validité $[A_1,B_1]$ est ensuite déterminé par le choix d'une valeur $a_2$ dans $[A_2,B_2]$. On voit ainsi dans l'exemple illustré que pour $a_2=1$, l'intervalle de validité est $[A_1,B_1]=[-3,1]$.

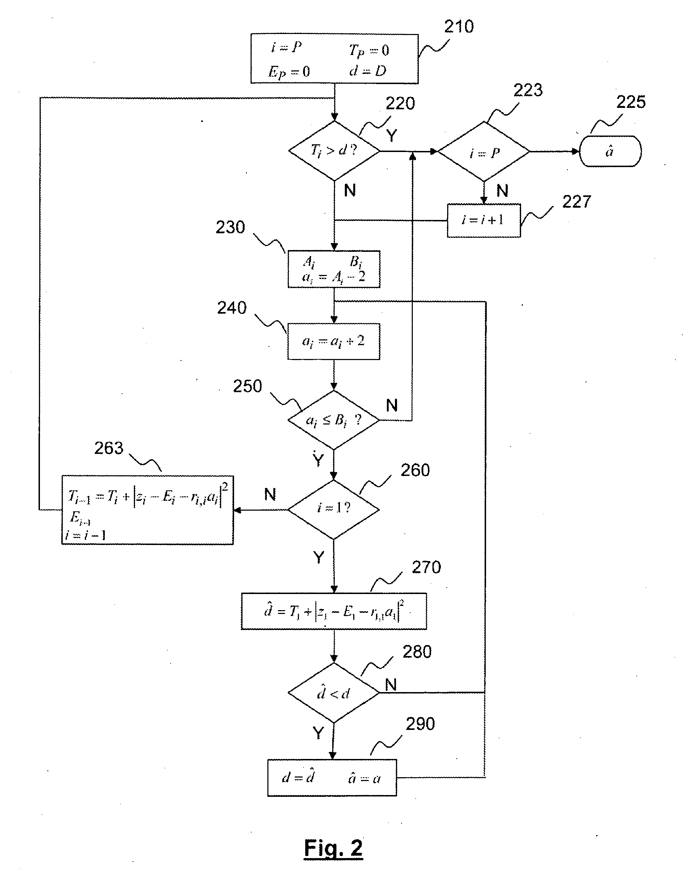

La Fig. 2 représente un organigramme de la méthode de décodage par sphère utilisant une énumération de Pohst.

A l'étape 210, on procède à l'initialisation de l'indice de couche, des variables intermédiaires et du rayon de recherche de la sphère, soit : $i=P$; $T_P=0$ ; $E_P=0$ ; $d=D$ où $D$ est le rayon quadratique initial de la sphère de recherche. $D$ est choisi en fonction d'une estimation de la puissance de bruit.

A l'étape 220, on teste si $T_i>d$, c'est-à-dire si l'intervalle se réduit à l'ensemble vide. Si c'est le cas, on teste en 223 si $i=P$ et dans l'affirmative l'algorithme se termine en 225. Dans la négative, on incrémente $i$ de 1 et l'on passe à l'étape 230.

Si $T_i \le d$, on calcule en 230 les bornes $A_i$ et $B_i$ selon (10) et on initialise $a_i$ par $a_i=A_i-2$.

A l'étape 240 on incrémente $a_i$ de 2 et on teste en 250 si le point correspondant est toujours dans l'intervalle, soit $a_i \le B_i$. Dans la négative, on retourne au test 223 et dans l'affirmative on teste en 260 si $i=1$. Si ce n'est pas le cas, on passe à l'étape 263 dans laquelle $i$ est décrémenté de 1 et les nouvelles valeurs $E_{i-1}$ et $T_{i-1}$ sont calculées. En revanche, si l'on a atteint la couche la plus basse, $i=1$, on ajoute en 270 la contribution de cette dernière couche pour obtenir la distance du candidat sélectionné au point **z,** soit $d=T_1+|z_1-E_1-r_{1,1}a_1|^2$. On compare en 280 cette distance au rayon quadratique courant $d$. Si elle est inférieure, on réduit le rayon de la sphère en conséquence $d=\hat{d}$ et on met à jour le meilleur candidat $\hat{a}=a$. Dans tous les cas on retourne ensuite à l'étape 240.

L'algorithme exposé ci-dessus effectue une recherche en balayant les intervalles de validité couche par couche à partir de leurs bornes inférieures vers leurs bornes supérieures, le balayage le plus rapide étant effectuée dans la couche la plus haute ($i=P$) et le plus lent dans la couche la plus basse ($i=1$). A chaque sélection d'une nouvelle coordonnée de candidat dans une couche, les bornes des intervalles de validité des couches supérieures sont recalculées. Par ailleurs, dès que l'on améliore la distance au point reçu, on met à jour le rayon de la sphère, ce qui permet d'accélérer la recherche. Enfin, le vecteur de sortie de l'algorithme est le point de la constellation produit le plus proche du point reçu **z**.

Le décodage par sphère utilisant l'énumération de Pohst est assez lent du fait du balayage systématique des intervalles de validité à partir de leurs bornes inférieures.

Le décodage par sphère utilisant l'énumération de Schnorr-Euchner est sensiblement plus rapide que le précédent. Il part du principe qu'il est plus efficace de faire une recherche en partant d'un point **ê** de la constellation produit correspondant à une première estimation du signal transmis. Plus précisément, ce point est obtenu au moyen d'une égalisation de type ZF-DFE: on soustrait l'interférence due à une couche (un utilisateur) aux couches (inférieures) suivantes, la décision à chaque couche étant prise par le décodeur par sphère.

Soit, en commençant par la couche $P$ :

$$\hat{e}_i = round(e_i)$$

avec

$$e_P = z_P / r_{P,P}$$

$$e_i = (z_i - \xi_i)/r_{ii} \quad \text{et} \quad \xi_i = \sum_{j=i+1}^{P} r_{i,j}\hat{e}_j \quad \text{pour} \quad i = P-1,...,1 \qquad (11)$$

où *round*(y) représente l'entier relatif impair (avec la forme précédente de transformation linéaire $\ell$) le plus proche de *y*.

Chaque couche $i$ contribue à la distance quadratique du point **a** du réseau au point **z** reçu pour $d_i=r_{ii}(a_i-e_i)^2$.

La recherche du plus proche voisin s'effectue dans chaque couche $i$ en considérant successivement les coordonnées $\hat{e}_i, \hat{e}_i+2\delta_i, \hat{e}_i-2\delta_i, \hat{e}_i+4\delta_i, \hat{e}_i-4\delta_i$, etc. où $\delta_i=\text{sgn}(e_i-\hat{e}_i)$. On comprendra que l'on part ainsi de $\hat{e}_i$ et que l'on progresse en zigzag de part et d'autre de cette estimation tout en s'assurant de rester dans l'intervalle de validité.

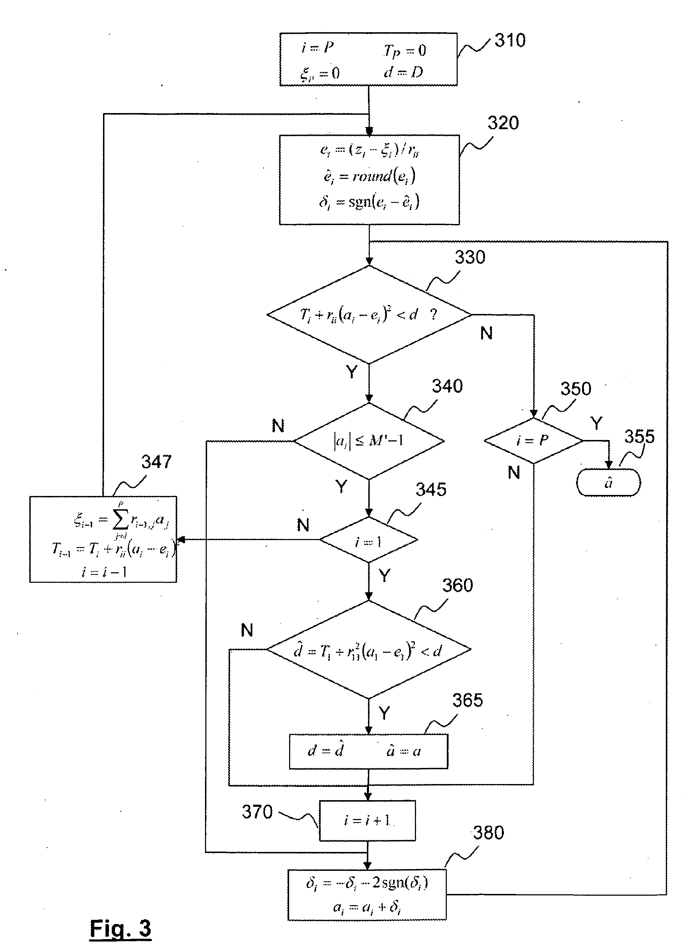

La Fig. 3 représente un organigramme de la méthode de décodage par sphère utilisant une énumération de Schnorr-Euchner.

A l'étape 310, on initialise l'indice de couche, les variables intermédiaires et le rayon de recherche de la sphère, soit : $i=P$ ; $\xi_P=0$ ; $T_P=0$ ; $d=D$ où $D$ est le rayon quadratique initial de la sphère de recherche.

A l'étape 320, on procède à l'égalisation ZF-DFE : $\hat{e}_i = round(e_i)$ avec $e_i = (z_i - \xi_i)/r_{ii}$, et l'on détermine la valeur de coordonnée initiale $a_i = \hat{e}_i$ ainsi que la direction de recherche initiale : $\delta_i = \text{sgn}(e_i - \hat{e}_i)$.

A l'étape 330, on teste si le point est dans la sphère, c'est-à-dire si $T_i + r_{ii}(a_i - e_i)^2 < d$. Dans la négative on passe à l'étape 350. Dans l'affirmative, on vérifie en 340 qu'il est bien dans la constellation c'est-à-dire que $|a_i| \leq M' - 1$. Si ce n'est pas le cas on passe à l'étape 380.

Si le candidat $a_i$ est dans l'intervalle de validité (projection de l'intersection de la sphère et de la constellation), on teste en 345 si l'on a atteint la couche la plus basse, $i=1$. Si c'est le cas, on poursuit en 360.

A défaut, on met à jour en 347 les variables intermédiaires : $\xi_{i-1} = \sum_{j=i}^{P} r_{i-1,j} a_j$ , $T_{i-1} = T_i + r_{ii}(a_i - e_i)^2$ et on décrémente $i$ de 1. On retourne ensuite à l'étape 320.

On teste en 350 si $i=P$. Si c'est le cas, l'algorithme se termine en 355, sinon, on passe à l'étape 370 pour incrémenter $i$ de 1.

A l'étape 345, si $i=1$, on a atteint la couche la plus basse et donc un point candidat a été trouvé. On ajoute la contribution de cette couche pour obtenir la distance du candidat sélectionné au point **z**, soit $\hat{d} = T_1 + r_{11}^2 (a_1 - e_1)^2$ .

On compare en 360 cette distance au rayon quadratique courant $d$. Si elle est inférieure à $d$, on met à jour la distance $d = \hat{d}$ et le plus proche voisin $\hat{a} = a$ en 365. Dans tous les cas on passe par 370 pour incrémenter $i$ de 1.

Enfin, à l'étape 380, on met à jour $a_i$ par $a_i = a_i + \delta_i$ avec $\delta_i = -\delta_i - 2\text{sgn}(\delta_i)$ et l'on retourne à l'étape 330.

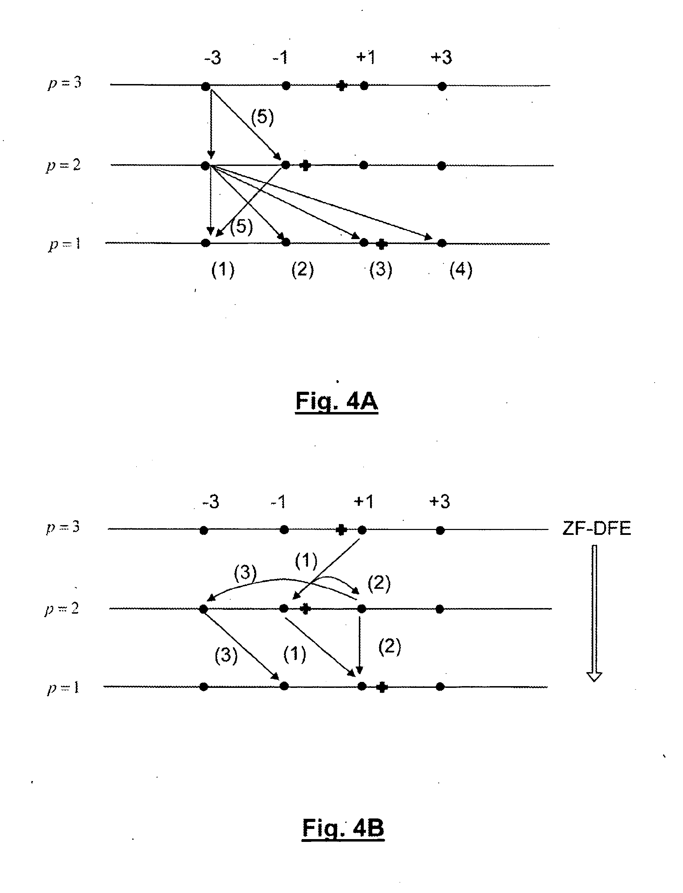

On a représenté schématiquement, en Fig. 4A et 4B, le balayage des points selon l'énumération de Pohst et celle de Schnorr-Euchner, respectivement. On a supposé que la constellation était 4-PAM et que le nombre de sources $P$ était de 3. Les différentes lignes correspondent aux projections selon les $P=3$ dimensions. On a représenté par des croix les composantes de **z** et par des cercles les points des constellations de modulation PAM. Dans les deux cas, les branches successivement parcourues par l'algorithme ont été indiquées par (1), (2) etc.

Alors que le décodage par sphère a fait l'objet de nombreuses études pour les modulations PAM et QAM, il n'a été envisagé que récemment pour les modulations PPM *(Pulse Position Modulation)*. Un décodage par sphère pour ce type de modulation a été proposé pour un système MIMO UWB de type impulsionnel dans l'article de C. Abou-Rjeily *et al.* intitulé « MIMO UWB communications using modified Hermite pulses », publié dans Proc. of the 17th Annual IEEE Internal Symposium on Personal, Indoor and Mobile Communications (PIRMC'06). On rappelle qu'un système UWB impulsionnel est un système utilisant la transmission en bande de base de trames d'impulsions très brèves (de l'ordre de quelques picosecondes). Les symboles transmis appartiennent à un alphabet de modulation $M$-PPM, ou de manière plus générale à une modulation hybride $M$-PPM-$M'$-PAM. Le cardinal de l'alphabet de modulation est $MM'$. Pour chacune des $M$ positions temporelles, $M'$ amplitudes de modulation sont possibles. Un symbole $a$ de cet alphabet peut être représenté par une séquence $a_m$, $m=0,..,M-1$ avec $a_m = \delta(m-\mu)\alpha$ où $\mu$ est une position de la modulation $M$-PPM, $\alpha$ une amplitude de la modulation PAM et $\delta(.)$ le symbole de Dirac. Chaque symbole PPM ou PPM-PAM module les positions temporelles et, le cas échéant, les positions temporelles et les amplitudes des impulsions élémentaires d'une trame.

On peut considérer un symbole $M$-PPM (resp. $M$ - PPM- $M'$-PAM) comme un vecteur de dimension $M$, dont une seule des composantes est égale à 1 (resp. $\alpha$) et les autres sont nulles. A la différence d'une modulation QAM, les composantes d'un symbole PPM ou PPM-PAM ne sont donc pas indépendantes.

Si l'on suppose que $P$ sources transmettent des symboles PPM, l'espace des signaux à considérer est de dimension $MP$. Dans cet espace, chaque source est représentée par une couche, elle-même composée de $M$ positions temporelles (ou sous-couches) d'un symbole PPM ou PPM-PAM.

Le décodage par sphère décrit dans l'article précité propose de traiter de manière conjointe $M$ couches consécutives en raison de leur interdépendance.

La relation (8) est alors remplacée par une contrainte liant $M$ sous-couches successives, soit pour la couche d'ordre $p$ :

$$\sum_{m=1}^{M} \left| z_m^{(p)} - \sum_{j=f(p,m)}^{PM} r_{f(p,m),j} a_j \right|^2 \leq d - T_p \qquad (12)$$

où :

**z**$^{(p)}$ est un sous vecteur de **z,** représentatif du signal reçu, autrement dit le vecteur **z** est formé par concaténation

de $P$ vecteurs $\mathbf{z}^{(1)}, .., \mathbf{z}^{(P)}$ correspondant chacun à une source, $z_m^{(p)}$ étant la m$^{ième}$ composante du symbole PPM ou PPM-PAM émis par cette source ;

la fonction $f$ est donnée par $f(p,m)=(p-1)M+m$ ;

$T_p$ est la somme des contributions à la distance quadratique des couches $p+1,...,P$.

Etant donné que, pour chaque source $p$, la transmission n'a lieu que pour une seule position $c(p) \in \{1,..,M\}$, l'expression (12) peut être réécrite sous la forme :

$$\sum_{m=1}^{M} \left| z_m^{(p)} - r_{f(p,m),f(p,c(p))} a_{f(p,c(p))} - E'_{p,m} \right|^2 \le d - T_p \qquad (13)$$

avec $E'_{p,m} = \sum_{j=f(p+1,1)}^{PM} r_{f(p,m),j} a_j$ , ou bien encore sous la forme plus compacte :

$$\left\| \mathbf{z}^{(p)} - a_{c(p)}^{(p)} \mathbf{R}_{.,\mathbf{c(p)}}^{(\mathbf{p},\mathbf{p})} - \mathbf{E}_{.,\mathbf{p}} \right\|^2 \le d - T_p \qquad (14)$$

où

le vecteur $\mathbf{a}$, comme le vecteur $\mathbf{z}$, est une concaténation de $P$ vecteurs $\mathbf{a}^{(1)}, \mathbf{a}^{(2)},...,\mathbf{a}^{(P)}$, le vecteur $\mathbf{a}^{(p)}$ étant de composantes $a_m^{(p)} = a_{f(p,m)}$ , $m = 1,..,M$ ;

$\mathbf{R}^{(\mathbf{i},\mathbf{j})}$ est une sous-matrice $M \times M$ de $\mathbf{R}$ constituée des éléments $r_{m,m'}$ avec $m = (i-1)M+1,..,iM$ et $m'=(j-1)M+1,...jM$ ; pour une matrice $\Omega$ donnée, $\Omega_{.,\mathbf{k}}$ désigne conventionnellement la k$^{ième}$ colonne de cette matrice ;

$\mathbf{E}_{.,\mathbf{p}}$ est la p$^{ième}$ colonne d'une matrice $\mathbf{E}$ et est définie par $\mathbf{E}_{.,\mathbf{p}} = \sum_{p'=p+1,1}^{P} a_{c(p')}^{(p')} \mathbf{R}_{.,\mathbf{c(p')}}^{(\mathbf{p},\mathbf{p'})}$ .

On comprendra de l'expression (14) que les $M$ sous-couches correspondant à la source $p$ sont traitées conjointement. En particulier, les bornes des intervalles de validité de chacune des composantes $a_m^{(p)}$ , $m = 1,..,M$ sont déterminées en même temps. Ces bornes dépendent des candidats $\mathbf{a}^{(\mathbf{p+1})}, .. \mathbf{a}^{(\mathbf{P})}$ déjà choisis pour les couches supérieures.

La technique d'énumération utilisée dans ce décodage par sphère peut être considérée comme une extension d'une énumération de Pohst. Les positions temporelles de chaque couche sont balayées une à une, à partir de leurs bornes inférieures, en prenant la précaution de ne sélectionner qu'une position par couche. La convergence du décodage est donc relativement lente.

D'autre part, l'application directe d'une technique d'énumération de type Schnorr-Euchner est loin d'être triviale puisque les sous-couches, c'est-à-dire les positions PPM d'une même couche ne sont pas indépendantes.

Le but de la présente invention est de proposer un procédé de décodage par sphère pour une pluralité de sources utilisant une modulation hybride PPM-PAM, qui converge plus rapidement que celui connu de l'état de la technique.

## EXPOSÉ DE L'INVENTION

La présente invention est définie par un procédé de décodage par sphère pour récepteur à maximum de vraisemblance destiné à recevoir des symboles PPM-PAM d'une pluralité $P$ de sources, chaque source émettant un flux de symboles PPM-PAM à $M$ positions et à $M'$ amplitudes de modulation, $P$ symboles PPM-PAM émis simultanément par les *P* sources étant représentés par un point de la constellation de modulation produit dans un espace des signaux transmis de dimension *MP* décomposé en *P* couches, chaque couche représentant les *M* positions de modulation possibles et en chacune de ces positions les *M'* amplitudes possibles d'un symbole PPM-PAM émis par cette source, le signal reçu par ledit récepteur étant transformé en un point représentatif de ce signal, dit point reçu, dans l'espace des signaux transmis, ledit procédé déterminant le point de la constellation produit le plus proche du point reçu à l'intérieur d'une sphère de rayon quadratique donné. Selon ledit procédé, pour chaque couche de rang *p* :

(a) on effectue une égalisation ZF-DFE du signal reçu dans ladite couche compte tenu des symboles PPM-PAM estimés dans les *P-p* couches précédentes, dites couches supérieures à la couche *p* ;
(b) on sélectionne un symbole PPM-PAM de cette couche :

(b1) en classant, pour chaque position PPM de ladite couche, la liste des symboles PAM en cette position, en fonction des contributions qu'ils apporteraient à la distance quadratique au point reçu et en retenant pour chaque liste le symbole PAM réalisant la plus faible contribution, dit champion de liste ;
(b2) en sélectionnant la position PPM réalisant la plus faible contribution et en sélectionnant comme symbole PPM-PAM le champion de la liste en la position ainsi déterminée ;

(c) on ajoute cette contribution à celles obtenues pour les couches précédentes pour obtenir une somme de contributions ;

les étapes (a),(b),(c) étant répétées jusqu'à ce que l'on atteigne la couche la plus basse ; et
l'on met à jour le rayon quadratique de la sphère et ledit point le plus proche si ladite somme de contributions est inférieure au rayon quadratique de la sphère.

Au sein de l'étape (b) l'étape (b2) est avantageusement suivie d'une étape (b3) dans laquelle on choisit comme nouveau champion de la liste relative à la position sélectionnée le symbole PAM suivant de cette liste.

Si pour une couche donnée et un symbole PPM-PAM sélectionné dans cette couche, ladite somme des contributions excède le rayon quadratique de la sphère, on passe à la couche supérieure et on sélectionne un nouveau symbole PPM-PAM dans cette couche selon l'étape (b).

Si tous les symboles de ladite couche supérieure ont déjà fait l'objet d'une sélection, on passe à la couche encore supérieure pour y sélectionner un nouveau symbole PPM-PAM selon l'étape (b).

Si l'on a atteint la couche la plus haute et que, soit l'on a sélectionné tous les symboles PPM-PAM de ladite couche, soit la contribution de ladite couche calculée pour le symbole sélectionné excède le rayon quadratique de la sphère, le procédé de décodage se termine en fournissant ledit point le plus proche.

Selon un exemple de réalisation, les symboles PPM-PAM des sources de rangs respectifs 1,..,*P*, estimés au sens du maximum de vraisemblance, sont obtenus comme sous-vecteurs à *M* composantes du vecteur à *MP* composantes représentant ledit point le plus proche.

L'invention est également définie par un récepteur à maximum de vraisemblance destiné à recevoir des symboles PPM-PAM d'une pluralité *P* de sources, comprenant un filtre adapté au canal de transmission entre les sources et le récepteur et, le cas échéant, au codage spatio-temporel utilisé à l'émission, le récepteur comprenant en outre un décodeur par sphère comprenant des moyens adaptés à exécuter les étapes du procédé de décodage par sphère selon l'une des revendications précédentes, le décodeur par sphère recevant en entrée la sortie dudit filtre adapté.

## BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :

La Fig. 1 illustre le principe d'un décodage par sphère pour un système à deux sources PAM ;
La Fig. 2 représente l'organigramme d'un premier algorithme de décodage par sphère connu de l'état de la technique ;
La Fig. 3 représente l'organigramme d'un second algorithme de décodage par sphère connu de l'état de la technique ;
Les Figs. 4A et 4B illustrent le balayage de points utilisés respectivement par le premier et le second algorithmes de décodage par sphère ;
La Fig. 5 représente l'énumération des symboles PPM-PAM au sein d'une couche pour un mode de réalisation de l'invention ;
La Fig. 6 représente l'organigramme d'un algorithme de décodage par sphère selon un mode de réalisation de l'invention ;
La Fig. 7 représente un exemple de progression à travers la constellation produit de l'algorithme de décodage par sphère selon l'invention.

**EXPOSÉ DÉTAILLÉ DE MODES DE RÉALISATION PARTICULIERS**

Nous considérerons ci-après un système comprenant $P$ sources de symboles PPM-PAM. L'alphabet de modulation comprend $M$ positions temporelles et, pour chacune de ces positions temporelles $M'$ valeurs d'amplitude. On rappelle qu'un élément quelconque de cet alphabet peut s'écrire sous la forme d'une séquence $a_m = \delta(m-\mu)\alpha$, $\mu = 1,..,M$ où $\alpha$ est un symbole de constellation $M'$-PAM Comme indiqué plus haut les sources de symboles peuvent être des flux de symboles émis par les antennes d'un terminal MIMO, flux de symboles en provenance ou à destination d'une pluralité d'utilisateurs, voire une combinaison de ces deux situations si chaque terminal utilisateur est équipé d'une pluralité d'antennes. Dans le cas général, $P = \sum_{k=1}^{K} i_k$ où $i_k$ est le nombre d'antennes du terminal de l'utilisateur $k$ et $K$ le nombre d'utilisateurs. On supposera dans la suite que les flux de symboles sont émis de manière synchrone. Ces flux de symboles modulent avantageusement mais non nécessairement des trames de signaux UWB impulsionnels.

Le récepteur est adapté à calculer $P'M$ variables de décision avec $P' > P$. Par exemple, chaque antenne de réception est équipé d'un récepteur Rake adapté à séparer $L$ trajets, et pour chaque trajet les $M$ positions temporelles de la modulation PPM. Les variables de décision sont alors les $P'M$ sorties de ces récepteurs Rake avec $P' = L.P^r$ où $P^r$ est le nombre d'antennes de réception. Si un codage spatio-temporel est utilisé à l'émission, un filtrage adapté à ce code est utilisé en réception pour séparer les différents utilisateurs et dans ce cas $P' = L.P^r.P$.

Dans tous les cas, le signal reçu par le récepteur peut être représenté par un vecteur $\mathbf{x}$ de dimension $P'M$ correspondant aux $P'M$ valeurs des variables de décision. Le vecteur $\mathbf{x}$ peut s'exprimer, en adoptant les mêmes notations que pour l'équation (1), sous la forme $\mathbf{x} = \mathbf{Ha+n}$, à la différence près que le vecteur $\mathbf{n}$ est ici de dimension $P'M$, le vecteur $\mathbf{a}$ de dimension $PM$ et la matrice $\mathbf{H}$ de taille $P'M \times PM$. Le vecteur $\mathbf{a}$ peut être considéré comme la concaténation de $P$ sous-vecteurs $\mathbf{a^{(1)}, a^{(2)},..., a^{(P)}}$ chaque sous-vecteur étant relatif à une source. La matrice $\mathbf{H}$ représente le canal de transmission et prend en compte les interférences multi-utilisateur et multi-trajet.

Si $\mathbf{R}$ est la matrice de taille $PM \times PM$ obtenue par transformation QR de la matrice $\mathbf{H}$, $\mathbf{z} = \mathbf{Q^T x}$ est un résumé exhaustif du signal reçu appartenant à l'espace des signaux transmis. Le décodage par sphère consiste à rechercher le point $\mathbf{\hat{a}}$, appartenant à l'intersection de la constellation produit et d'une boule de bruit centrée sur $\mathbf{z}$ et pour lequel la distance à $\mathbf{z}$ est minimale. On appelle constellation produit la constellation générée par les constellations hybrides PPM-PAM des différentes sources. Le récepteur détermine parmi les $(MM')^P$ points de la constellation produit, c'est-à-dire parmi les $(MM')^P$ combinaisons de symboles PPM-PAM possibles émis par les $P$ sources, celle qui satisfait au critère de maximum de vraisemblance. On notera, comme précédemment, pour une matrice $\Omega$ quelconque de taille $PM \times PM$, $\Omega^{(i,j)}$ la sous-matrice de taille $M \times M$ de $\mathbf{R}$ constituée des éléments $\omega_{m,m'}$ avec $m = (i-1)M+1,..,iM$ et $m' = (j-1)M+1,...jM$,

avec $1 \leq i,j \leq P$ et $\Omega^{(i,j)}_{m,m'}$ le $(m,m')$ième élément de la matrice $\Omega^{(i,j)}$, c'est-à-dire $\Omega^{(i,j)}_{m,m'} = \omega_{m,m'}$.

Le procédé de décodage utilise une égalisation ZF-DFE du signal transmis. Plus précisément, on calcule tout d'abord :

$$\mathbf{e_P = Vz} \quad \text{avec} \quad \mathbf{V = R^{-1}} \tag{15}$$

ou plus simplement puisque l'on commence par la dernière couche (couche d'ordre $P$), du fait de la forme triangulaire supérieure de la matrice $\mathbf{R}$ :

$$\mathbf{e_P^{(P)} = V^{(p,p)} z^{(p)}} \quad \text{avec} \quad \mathbf{V^{(p,p)} = \left( R^{(p,p)} \right)^{-1}} \tag{16}$$

Le vecteur $\mathbf{e_P^{(P)}}$ est de dimension $M$ et à valeurs réelles. On détermine le symbole PPM-PAM $\mathbf{\hat{a}^{(P)}}$ le plus proche de $\mathbf{e_P^{(P)}}$ au sens d'une certaine distance que nous détaillerons plus loin. Plus précisément on détermine respectivement la position *pos(P)* et l'amplitude $\alpha_{pos(P)}$ donnant les composantes $\hat{a}_m^{(P)} = \alpha_{pos(P)}\delta\left(m - pos(P)\right)$.

Comme nous le verrons plus loin *pos(P)* et $\alpha_{pos(P)}$ sont déterminés selon un processus de compétition entre positions PPM. L'estimation ZF-DFE de $\mathbf{z}^{(p)}$ s'exprime comme $\hat{\mathbf{a}}^{(P)} = \hat{\mathbf{e}}_P^{(P)} = \alpha_{pos(P)}\mathbf{I}_{.,pos(P)}^M$ où $\mathbf{I}^M$ est la matrice unité de taille $M \times M$, autrement dit $\hat{\mathbf{a}}^{(P)}$ est un vecteur de taille $M$ dont les composantes sont nulles à l'exception de celle d'indice *pos(p)*, égale à $\alpha_{pos(P)}$.

On note $\hat{\mathbf{e}}_P$ le vecteur de taille $MP$ dont les $(P\text{-}1)M$ premières composantes sont nulles et les $M$ dernières sont égales à celles de $\hat{\mathbf{e}}_P^{(P)}$

On soustrait des couches inférieures l'interférence due à la couche $P$ et l'on estime ensuite $\hat{\mathbf{a}}^{(P-1)}$, plus précisément :

$$\mathbf{e}_{P-1} = \mathbf{V}\left(\mathbf{z} - \mathbf{R}\hat{\mathbf{e}}_P\right), \qquad\qquad (17)$$

ou encore, puisque $\mathbf{R}$ et $\mathbf{V}$ sont triangulaires supérieures :

$$\mathbf{e}_{P-1}^{(P-1)} = \mathbf{V}^{(p-1,p-1)}\left(\mathbf{z}^{(p-1)} - \mathbf{R}^{(p-1,p)}\hat{\mathbf{e}}_P^{(p)}\right) + \mathbf{V}^{(p-1,p)}\left(\mathbf{z}^{(p)} - \mathbf{R}^{(p,p)}\hat{\mathbf{e}}_P^{(p)}\right)$$

$$(18)$$

et l'estimation ZF-DFE n'est autre que $\hat{\mathbf{a}}_{P-1} = \hat{\mathbf{e}}_{P-1}^{(P-1)} = \alpha_{pos(P-1)}\mathbf{I}_{.,pos(P-1)}^M$ où *pos(P-1)* et $\alpha_{pos(P-1)}$ sont obtenues par le processus de compétition entre positions PPM précité.

On procède ainsi de couche en couche, en éliminant à chaque couche $p$, l'interférence due aux $P$-$p$ couches supérieures. Lorsque les $P$ couches ont été soumises à l'égalisation ZF-DFE, on dispose d'un vecteur $\hat{\mathbf{a}}$ défini par la concaténation des $\hat{\mathbf{a}}^{(p)}$ pour $p=1,..,P$.

Ce vecteur peut être représenté par un point de la constellation produit PPM-PAM. On part de ce point pour rechercher le plus proche voisin de $\mathbf{z}$. La recherche se poursuit ensuite au sein de ladite constellation, selon une méthode d'énumération exposée ci-après.

On a vu plus haut que, pour chaque couche $p$, on déterminait le symbole $\hat{\mathbf{a}}^{(p)}$ le plus proche de $\mathbf{e}_p^{(p)}$. La contribution de cette couche à la distance quadratique entre $\mathbf{z}$ et $\hat{\mathbf{a}}$ peut s'écrire :

$$d_p = \left\|\mathbf{R}^{(p,p)}\left(\hat{\mathbf{a}}^p - \mathbf{e}_p^{(p)}\right)\right\|^2 \qquad\qquad (19)$$

étant donné que $\hat{\mathbf{a}}^{(p)} = \alpha_{pos(p)}\delta(m\text{-}pos(p))$ cette contribution s'exprime comme :

$$d_p = \left\|\mathbf{R}^{(p,p)}\left(\alpha_{pos(p)}\mathbf{I}_{.,pos(p)} - \mathbf{e}_p^{(p)}\right)\right\|^2 = \left\|\alpha_{pos(p)}\mathbf{R}_{.,pos(p)}^{(p,p)} - \mathbf{E}^{(p)}\right\|^2 \qquad (20)$$

avec $\mathbf{E}^{(p)} = \mathbf{R}^{(p,p)}\mathbf{e}_p^{(p)}$.

On notera qu'en l'absence d'interférence entre les différentes positions de modulation, c'est-à-dire si la réponse impulsionnelle du canal de transmission est plus courte que l'écart temporel entre ces positions, la matrice $\mathbf{R^{(p,p)}}$ est diagonale et que la distance quadratique $d_p$ se confond avec l'écart quadratique entre le symbole PPM-PAM testé $\hat{\mathbf{a}}^{(p)}$ et le signal égalisé par source.

L'expression (20) peut se développer sous la forme suivante :

$$d_p = \left(\mathbf{E^{(p)}}\right)^T \mathbf{E^{(p)}} - 2\alpha_{pos(p)}\left(\mathbf{R^{(p,p)}_{.,pos(p)}}\right)^T \mathbf{E^{(p)}} + \left(\alpha_{pos(p)}\right)^2 \left(\mathbf{R^{(p,p)}_{.,pos(p)}}\right)^T \mathbf{R^{(p,p)}_{.,pos(p)}}$$

$$(21)$$

On considère maintenant une position PPM $pos(p)$ donnée et que l'on recherche le symbole PAM en cette position qui minimise $d_p$. Etant donné que le premier terme $\mathbf{(E^{(p)})}^T\mathbf{E^{(p)}}$ ne dépend pas de $\alpha_{pos(p)}$, le minimum est obtenu, en dérivant (21), pour :

$$\tilde{\alpha}_{pos(p)} = \frac{\left(\mathbf{R^{(p,p)}_{.,pos(p)}}\right)^T \mathbf{E^{(p)}}}{\left(\mathbf{R^{(p,p)}_{.,pos(p)}}\right)^T \mathbf{R^{(p,p)}_{.,pos(p)}}} \qquad (22)$$

où l'on a noté ici $\tilde{\alpha}_{pos(p)}$ une variable réelle pour les besoins de la dérivation. La distance $d_p$ est donc minimale pour :

$$\alpha_{pos(p)} = round\left(\tilde{\alpha}_{pos(p)}\right) \qquad (23)$$

où $round(x)$ est l'entier impair le plus proche de $x$.

Pour une position $pos(p)$ donnée, les symboles PAM en cette position sont testés à partir de la valeur $\alpha_{pos(p)}$ puis successivement de part et d'autre de cette valeur en s'écartant de plus en plus du minimum. Plus précisément les valeurs suivantes de la position $pos(p)$ sont testées selon la séquence :

$$\alpha_{pos(p)} \quad ; \quad \alpha_{pos(p)} + 2\Delta_{pos(p)} \quad ; \quad \alpha_{pos(p)} - 2\Delta_{pos(p)} \quad ; \quad \alpha_{pos(p)} + 4\Delta_{pos(p)} \quad ;$$

$$\alpha_{pos(p)} - 4\Delta_{pos(p)} \quad ; \dots$$

$$(24)$$

avec $\Delta_{pos(p)} = sign(\tilde{\alpha}_{pos(p)} - \alpha_{pos(p)})$ tant que l'on reste dans les bornes de la constellation PAM $[-M'+1, M'-1]$. Du fait de la variation parabolique de $d_p$, les contributions des symboles PAM successifs de la liste (24) sont croissantes.

Pour sélectionner les symboles PPM-PAM à tester au sein d'une couche, on procède alors comme suit.

Pour chaque position PPM $m \in \{1,...,M\}$, on détermine une liste $L_m^p$ donnant la liste des symboles PAM de cette position, notés $\alpha_m^p$ et rangés par contributions $d_p$ croissantes, comme en (24). A chaque liste $L_m^p$ correspond une valeur d'incrément $\Delta_m^p$ et un pointeur $\pi_m^p$ pointant sur le symbole $\alpha_m^p$ en cours de test.

A chaque fois que l'on arrive à la couche $p$ pour procéder à une nouvelle égalisation ZF-DFE $\mathbf{e_p^{(p)}}$, c'est-à-dire en y arrivant par la couche $p+1$, on détermine les listes $L_m^p$ pour $m \in \{1,...,M\}$ et l'on initialise les pointeurs $\pi_m^p$

sur les premiers éléments respectifs de ces listes. On détermine la première position PPM à tester de la couche $p$ par une compétition entre listes. La position PPM gagnante est donnée par :

$$pos(p) = \arg\min_{m}\left(\alpha_m^p\right) \qquad\qquad (25)$$

Le premier symbole PPM-PAM testé de la couche $p$ est par conséquent défini par :

$\min_{m}\left(\alpha_m^p\right)\delta\left(m - \arg\min_{m}\left(\alpha_m^p\right)\right)$. On incrémente ensuite le pointeur $\pi_{pos(p)}^p$ de sorte qu'il pointe désormais vers le second élément de la liste $L_{pos(p)}^p$, soit $\alpha_{pos(p)}^p + 2\Delta_{pos(p)}^p$.

Au passage suivant dans la couche $p$, sans égalisation ZF-DFE, c'est-à-dire en arrivant comme on le verra par la couche $p$-1, on procède à nouveau à une compétition entre listes, les candidats de chaque liste étant désignés

par les pointeurs $\pi_m^p$. Si l'on note $PAM\left(\pi_m^p\right)$ les $M$ candidats, la position PPM gagnante est donnée par :

$$pos(p) = \arg\min_{m}\left(PAM\left(\pi_m^p\right)\right) \qquad\qquad (26)$$

et le symbole PPM-PAM correspondant à sélectionner est défini par les composantes $\alpha_{pos(p)}^p\delta\left(m - pos(p)\right)$.

On procède ainsi à chaque passage dans la couche $p$. Si pour une position PPM $m$ donnée tous les symboles PAM de la liste $L_m^p$ ont été testés, on lève un drapeau pour la position en question de manière à ce qu'ils ne soient plus pris en compte. Plus précisément, dès lors que pour le $i$ème passage en position $m$, on a :

$$\alpha_{pos(p)} + 2^{i+1}(-1)^{i+1}\Delta_{pos(p)} < -M'+1 \quad \text{ou} \quad \alpha_{pos(p)} + 2^{i+1}(-1)^{i+1}\Delta_{pos(p)} > M'-1$$

et que pour le passage suivant en cette position on a :

$$\alpha_{pos(p)} + 2^{i+2}(-1)^{i}\Delta_{pos(p)} < -M'+1 \quad \text{ou} \quad \alpha_{pos(p)} + 2^{i+2}(-1)^{i}\Delta_{pos(p)} > M'-1,$$

c'est-à-dire, dès lors que l'on a franchit les bornes supérieure et inférieure de la constellation PAM, un drapeau $flag_m^p$

est levé soit $flag_m^p = 1$. Si on constate que $\prod_{m=1}^{M} flag_m^p = 1$, c'est-à-dire que tous les symboles PPM-PAM de la couche $p$ ont été testés, on passe à la couche supérieure $p$+1, pour rechercher un nouveau symbole PPM-PAM dans cette dernière.

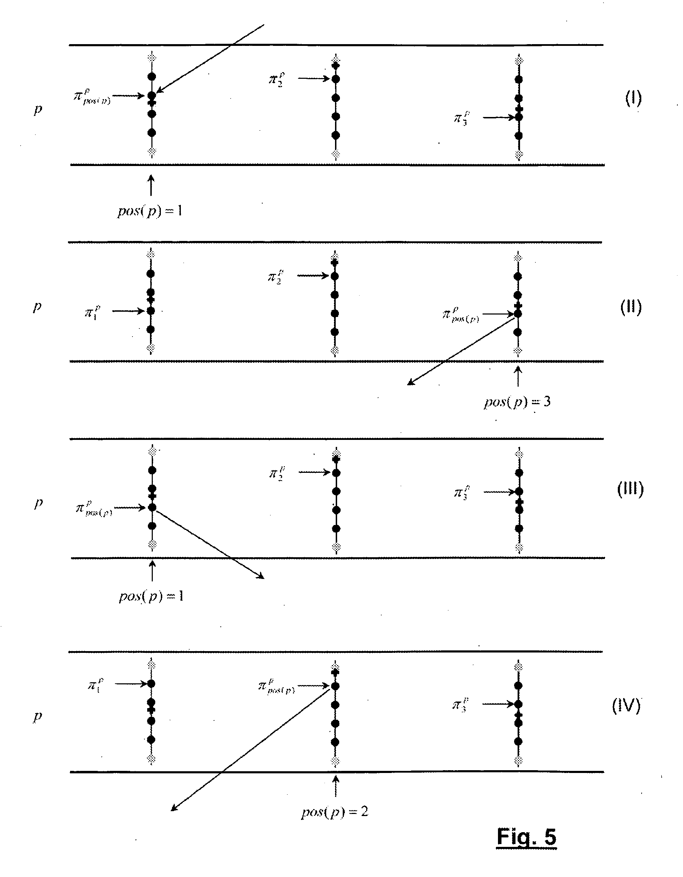

On a illustré en Fig. 5 la manière dont les symboles PPM-PAM étaient énumérés au sein d'une couche $p$. On a supposé ici que la constellation était 3-PPM-4-PAM et on a représenté les positions PPM par des barres verticales. Les points de la constellation sont indiqués par des disques noirs, les points hors constellation mais appartenant néanmoins au réseau de points sont représentés par des disques gris. Les composantes de $e_p^{(p)}$ sur les différentes positions PPM, c'est-à-dire du signal reçu de la source $p$ après égalisation ZF-DFE, sont représentés par des croix noires.

**EP 1 965 533 B1**

Lors d'un passage (I) dans la couche *p*, à partir de la couche *p*+1, après égalisation, les positions initiales des pointeurs sont déterminées pour chacune des positions PPM. Après compétition entre les trois listes, la position 1 est retenue et le symbole sélectionné est (1,+1). C'est ce symbole **â**$_p$ qui sera utilisé pour l'égalisation des couches inférieures.

Le pointeur de la liste $L_1^p$ est déplacé vers le symbole suivant de la liste, soit (1,-1).

Lors d'un second passage (II), à partir de la couche *p*-1, la compétition entre listes donne la position 3 gagnante. Le symbole sélectionné est (3,-1). Comme précédemment, ce symbole est utilisé pour l'égalisation des couches inférieures. Le pointeur de la liste $L_3^p$ est déplacé vers le symbole suivant de la liste, soit (3,+1).

Lors d'un troisième passage (III), à partir de la couche *p*-1, la compétition entre listes donne la position 1 gagnante. Le pointeur de la liste $L_1^p$ est déplacé vers le symbole suivant de la liste, soit (1,+3).

Lors d'un quatrième passage (IV), à partir de la couche *p*-1, la compétition entre listes donne cette-fois la position 2 gagnante. Le symbole sélectionné est (2,+3) Le pointeur de la liste $L_2^p$ est déplacé vers le symbole suivant de la liste, soit (2,+1).

Le décodage par sphère commence par la dernière couche (couche *P*). On ordonne les listes $L_m^P$, *m* = 1,..*M* de symboles PPM-PAM de cette couche comme on l'a vu plus haut. On sélectionne d'abord celui qui apporterait la plus faible contribution $d_P$ à la distance quadratique au signal reçu grâce à la compétition entre listes. On élimine l'interférence générée par le symbole **â**$_P$ sur toutes les couches inférieures *P*-1,*P*-2,...,1. On passe ensuite à la couche immédiatement inférieure et on recommence ainsi pour chaque couche *p*>1.

On progresse ainsi de couche en couche, les symboles sélectionnés dans les différentes couches formant une branche. Si la somme des contributions des couches supérieures et de la couche courante est supérieure au rayon courant de la sphère, on abandonne la branche en question et on passe à la couche supérieure à la couche courante pour sélectionner un nouveau symbole PPM-PAM. A l'inverse, on poursuit la branche jusqu' à ce que l'on atteigne la couche de rang 1. La distance quadratique entre le point **â** de la constellation produit au point reçu est obtenue comme la somme des contributions des différentes couches, soit $\sigma_1 = \sum_{k=1}^{P} d_k$ . Si la distance est plus faible que le rayon courant de la sphère, le rayon ainsi que le meilleur point courant **â**$_{opt}$ sont mis à jour. Plus précisément, le nouveau rayon de la sphère prend la valeur de ladite distance et **â**$_{opt}$=**â.**

On retourne ensuite à la couche immédiatement supérieure (en l'occurrence la couche 2) pour sélectionner le second symbole PPM-PAM de cette couche grâce à la compétition entre listes. On élimine des couches inférieures (en l'occurrence de la couche de rang 1) l'interférence générée par ce symbole et l'on procède comme précédemment.

De manière générale, supposons que l'on arrive à une couche *p*+1 de la couche inférieure *p*. Si les listes $L_m^{p+1}$ sont épuisées, c'est-à-dire si l'on a déjà précédemment testé les *MM'* symboles de cette couche, ou bien si la somme des contributions $\sigma_{p+1} = \sum_{k=p+1}^{P} d_k$ est plus grande que le rayon quadratique courant, on passe à la couche supérieure suivante.

On progresse ainsi, par remontées successives vers des couches de rangs de plus en plus élevés et avec des intervalles de validité de plus en plus étroits (étant donné que le rayon de la sphère est mis à jour), jusqu'à ce que l'on ait épuisé la liste de la couche racine (couche *P*), auquel cas l'algorithme s'arrête. En sortie de décodage, le meilleur point en sortie **â**$_{opt}$ est celui qui réalise le minimum de distance à z. Le point **â**$_{opt}$ fournit l'estimation ML des symboles PPM-PAM transmis par les *P* sources, soit $\hat{\mathbf{a}}_{opt}^{(1)}, \hat{\mathbf{a}}_{opt}^{(2)}, ..., \hat{\mathbf{a}}_{opt}^{(P)}$.

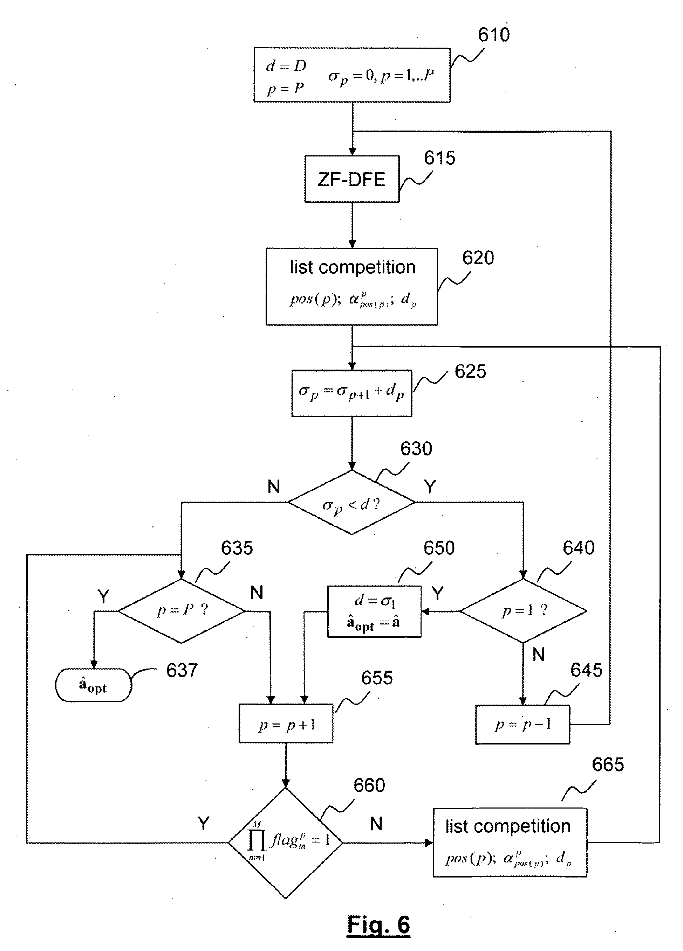

La Fig. 6 représente de manière schématique l'organigramme du procédé de décodage par sphère d'une pluralité de sources PPM selon l'invention.

A l'étape 610, on initialise l'indice de couche par celui de la plus haute, *p*=*P*. On initialise les variables intermédiaires, notamment le rayon quadratique *d* de la sphère, *d* = *D* et *P* variables représentant respectivement la somme

**13**

des contributions à la distance quadratique jusqu'aux P couches respectives $\sigma_p = \sum_{k=p}^{P} d_p$ , soit $\sigma_p=0$ pour $p=1,..,P$.

A l'étape 615, on effectue l'égalisation ZF-DFE de la couche courante $p$ compte tenu des symboles $\hat{\mathbf{a}}^{(P)}, \hat{\mathbf{a}}^{(P-1)},..,\hat{\mathbf{a}}^{(p+1)}$ sélectionnés dans les couches supérieures précédentes.

A l'étape 620, on détermine les listes ordonnées $L_m^p$ et les premiers éléments $\alpha_m^p$ de chacune de ces listes.

On initialise les pointeurs $\pi_m^p$ pour qu'ils pointent vers ces premiers éléments. On détermine $pos(p)$ et $\alpha_{pos(p)}^p$ grâce à la compétition entre listes puis l'on calcule la contribution $d_p$ grâce à (21). On abaisse également les drapeaux de dépassement des intervalles de validité $flag_m^p = 0$ , $m = 1,..,M$ .

A l'étape 625, on met à jour $\sigma_p$, la somme des contributions des couches $p,..,P$ à la distance euclidienne à **z**, soit $\sigma_p=\sigma_{p+1}+d_p$, compte tenu des symboles PPM-PAM sélectionnés dans ces couches.
On teste ensuite si la somme de ces contributions excède le rayon quadratique courant $d$ de la sphère. Si c'est le cas, il est inutile de conserver la branche courante $\hat{\mathbf{a}}^{(P)},\hat{\mathbf{a}}^{(P-1)},...,\hat{\mathbf{a}}^{(p)}$ puisque elle ne pourra, quels que soient les symboles que l'on sélectionnera dans les couches inférieures suivantes, conduire au plus proche voisin. On passe alors au test 635. Par contre si $\sigma_p$ est inférieure au dit rayon quadratique on passe au test 640.
En 635, on teste si $p = P$. Si c'est le cas l'algorithme s'arrête en 637 et le plus proche voisin de **z** appartenant au réseau est $\hat{\mathbf{a}}_{opt}$.
Si $p \neq P$, on incrémente $p$ en 655 et on teste en 660 si on l'on a épuisé tous les symboles PPM-PAM de la couche en question, c'est-à-dire si $\prod_{m=1}^{M} flag_m^p = 1$ .

Dans l'affirmative, on retourne au test 635. Dans la négative, en 665, on procède à la compétition entre listes et on sélectionne le nouveau symbole PPM-PAM de la couche. On actualise les pointeurs $\pi_m^p$ et les drapeaux $flag_m^p$ , pour $m=1,..,M$. On met également à jour la valeur de $d_p$ correspondant au nouveau symbole sélectionné et on retourne à l'étape 625. En pratique, si l'on a préalablement calculé et stocké les valeurs $d_p$ pour les différents symboles PPM-PAM en 620, il n'est pas nécessaire de recalculer $d_p$.
Si l'on décide de conserver la branche courante $\hat{\mathbf{a}}^{(P)},\hat{\mathbf{a}}^{(P-1)},...,\hat{\mathbf{a}}^{(p)}$ en 630, on teste en 640 si cette branche a atteint la couche la plus basse ($p=1$), auquel cas on dispose d'un point du réseau améliorant la distance courante à **z** et l'on passe à l'étape 650. Si, en revanche ce n'est pas le cas ($p\neq1$), on passe à la couche inférieure suivante en 645, puis on retourne à l'étape d'égalisation ZF-DFE.
A l'étape 650, on met à jour le rayon de la sphère, soit $d=\sigma_1$ et le meilleur candidat $\hat{\mathbf{a}}_{opt}=\hat{\mathbf{a}}$, puis on poursuit la recherche en incrémentant $p$ à l'étape 655.

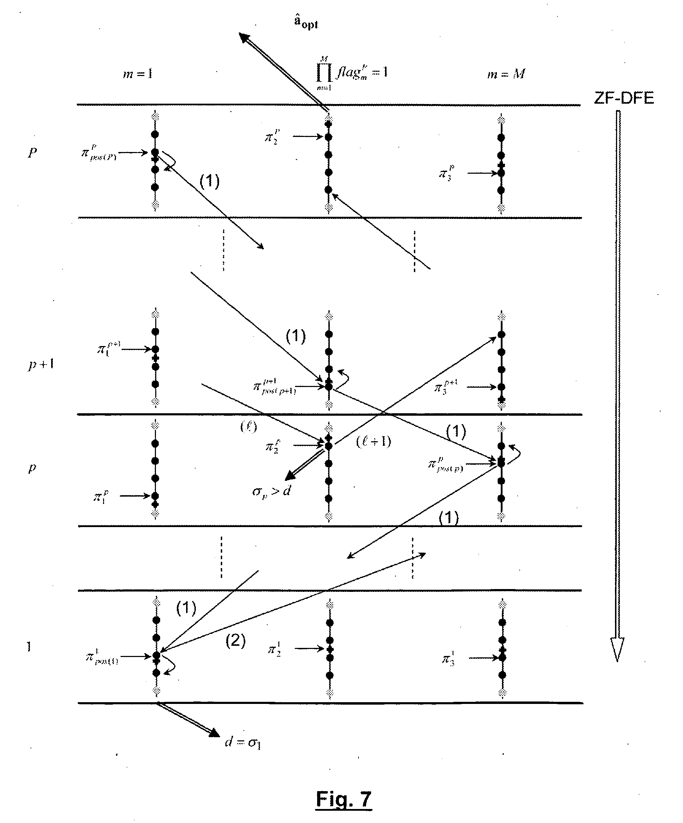

Le meilleur candidat donne une estimation ML conjointe $\hat{\mathbf{a}}_{opt}^{(1)}$ , $\hat{\mathbf{a}}_{opt}^{(2)}$ , $..$ $\hat{\mathbf{a}}_{opt}^{(P)}$ des symboles PPM-PAM émis par les $P$ sources.
On a illustré en Fig. 7 la progression du décodage par sphère au sein de la constellation produit. L'espace des symboles transmis est divisé en $P$ couches, chacune comportant $M$ positions à $M'$ niveaux d'amplitude. On a représenté en ordonnées pour chacune des positions PPM de chaque couche $p$ les $M$ composantes de $\mathbf{e}_p^{(p)}$ , obtenues comme on l'a vu par égalisation ZF-DFE.
La branche notée (1) est la première branche testée. Dans le cas présent, la branche progresse jusqu'à la couche la plus basse et améliore la distance quadratique à **z.** Le rayon quadratique $d$ de la sphère est alors mis à jour. On passe à la couche 2 et le test d'une nouvelle branche (2). Etant donné que l'on a sélectionné un nouveau candidat dans la couche (2), on procède préalablement à une nouvelle égalisation de la couche 1.
On a représenté par ($\ell$) une branche en cours de test. On remarque que lorsque cette branche atteint la couche $p,$ la somme $\sigma_p$ des contributions des couches supérieures et de la couche courante $P,P-1,..,p$, excède le rayon quadratique courant $d$ de la sphère. La recherche se poursuit en passant à la couche supérieure $p+1$ et en sélectionnant dans cette couche le symbole PPM-PAM (cf. étape 665 de la Fig. 6). On actualise la somme des contributions, $\sigma_{p+1}$. Si cette somme est inférieure à $d$ on poursuit avec la nouvelle branche ($\ell$+1), sinon on remonte encore d'une couche.

Lorsque l'on atteint la couche la plus haute (cf. étape 635 de la Fig. 6) et que, soit l'on a épuisé les symboles de les listes $L_m^P$ ($\prod_{m=1}^{M} flag_m^P = 1$), soit la contribution de la couche $P$ excède $d$, l'algorithme de décodage se termine en fournissant $\hat{a}_{opt}$.

On a donné en annexe le pseudo-code de la méthode de décodage par sphère selon une réalisation possible de l'invention. Les notations suivantes ont été adoptées :

$0_M$ est le vecteur nul de taille $M$ ;

$1_M$ est un vecteur de taille $M$ dont toutes les composantes sont égales à 1 ;

**flag** et **flag**1 sont des matrices de tailles $MP$. Elles indiquent pour chacune des couches et pour chaque position PPM dans cette couche les états de dépassement des bornes de la constellation PAM située en cette position ;

$\rho$ est un vecteur de taille $M$ ;

**e** et **E** sont des matrices de taille $MP \times P$, les colonnes de e donnent le résultat de l'égalisation ZF-DFE ;

**A** matrice de taille $M \times P$ dont les colonnes sont les $M$ composantes des symboles PPM-PAM sélectionnés pour les différentes couches ;

**diag($\Omega$)** est la matrice diagonale composée des éléments diagonaux de la matrice $\Omega$ ;

**Diag($\Omega$)** est un vecteur dont les composantes sont les éléments diagonaux de la matrice $\Omega$ ;

*Round(x)* est l'entier le plus proche de $x$ ;

$C_0$ est un nombre positif plus grand que la distance initiale. Il pondère dans la fonction de coût les positions PPM dont tous les symboles PAM ont été testés (franchissement des bornes inférieure et supérieure de la constellation PAM), de manière à les exclure de la sélection.

La méthode de décodage par sphère exposée ci-dessus est destinée à être implémentée grâce à des moyens logiciels ou matériels dans un récepteur ML opérant dans un système multi-source, par exemple un système MIMO et/ou un système multi-utilisateur. Avantageusement, les symboles PPM d'une source servent à moduler un signal impulsionnel du type TH-UWB *(Time* Hopped UWB), DS-UWB *(Direct Spread* UWB) ou TH-DS-UWB. Les signaux ainsi modulés sont transmis par exemple grâce à des antennes UWB conventionnelles ou des diodes laser.

### Annexe

### Décodage par sphère

(input **z**, **R**, *P, M, M', D;* **output**:$\hat{a}_{opt}$) :

**Step 1** (Initialisation):
Set $k = P + 1$; *dist(k)* = 0 ; **V** = **R**$^{-1}$; $\rho$ = $0_M$ ; *bestdist = D*
$C_0$ nombre positif tel que $C_0 > D$

**Step 2 :**
*newdist = dist(k)* + $\rho^T \rho$ ;
if (*newdist < bestdist*) & *(k $\neq$ 1)* go to Step 3 else go to Step 4 endif.

**Step 3 :**

**3.1** if $k = P + 1$, $e_{.,k-1}$ = **Vz** else

**3.2** for $i = 1, .., k - 1$, $e_{.,k-1}^{(i)} = e_{.,k}^{(i)} - V^{(i,k)}\rho$ endfor endif.

**3.3** $k = k - 1$, *dist(k) = newdist*

**3.4** $E_{.,k}^{(k)} = R^{(k,k)} e_{.,k}^{(k)}$

**3.5** $\left[ pos(k), \alpha_{pos(k)}, \alpha_{.,k}, \widetilde{\alpha}_{.,k}, d_{.,k} \right] = list\_compete\left( E_{.,k}^{(k)}, R^{(k,k)}, M' \right)$

**3.6** $\mathbf{A}_{.,k} = \alpha_{pos}(k)\mathbf{I}_{.,pos(k)}$

**3.7** $\mathbf{step}_{.,k} = \mathbf{0}_M$, $step_{pos(k),k} = 2\text{sign}\,(\widetilde{\alpha}_{step(k),k} - \alpha_{step(k),k})$

**3.8** $\mathbf{flag}_{.,k} = \mathbf{0}_M$, $\mathbf{flag1}_{.,k} = \mathbf{0}_M$

**3.9** if $\alpha_{pos(k),k} + step_{pos(k),k} < -M'+1$ or $\alpha_{pos(k),k} + step_{pos(k),k} > M'-1$,

**3.10** $step_{pos(k),k} = -2\text{sign}\,(step_{pos(k),k})$, $flag1_{pos(k),k} = 0$ endif

**3.11** $\boldsymbol{\rho} = \mathbf{E}_{.,k}^{(k)} - \alpha_{pos(k)}\mathbf{R}_{.,pos(k)}^{(k,k)}$, go to Step 2.

**Step 4 :**

**4.1** if $newdist < bestdist$, $bestdist = newdist$

**4.2** for, $i = 1,...,P$, $\hat{\mathbf{a}}_{opt}^{(i)} = \mathbf{A}_{.,i}$, , endfor

**4.3** else if $k = P$, terminate else $k = k + 1$ endif.

**4.4** if $\prod_{m=1}^{M} flag_{m,k} = 1$ go to Step 4 endif.

**4.5** ! génération du nouveau symbole PPM-PAM à tester

**4.6**
$$d_{step(k),k} = -2\left(\mathbf{R}_{.,pos(k)}^{(k,k)}\right)^{\mathbf{T}}\mathbf{E}_{.,k}^{(k)}\left(\alpha_{pos(k),k} + \Delta_{pos(k),k}\right)$$
$$+ \left[\left(\mathbf{R}_{:,pos(k)}^{(k,k)}\right)^{\mathbf{T}}\mathbf{R}_{:,pos(k)}^{(k,k)}\right]\left(\alpha_{pos(k),k} + \Delta_{pos(k),k}\right)^2 + C_0 flag_{pos(k),k}$$

**4.7** $pos(k) = \underset{m \in \{1,..,M\}}{\arg\min}\left(d_{m,k}\right)$

**4.8** $\alpha_{pos(k),k} = \alpha_{pos(k),k} + step_{pos(k),k}$

**4.9** if $step_{pos(k),k} = 0$, $step_{pos(k),k} = 2\text{sign}(\widetilde{\alpha}_{step(k),k} - \alpha_{step(k),k})$

**4.10** else

$step_{pos(k),k} = (-1)^{flag1_{pos(k),k}} step_{pos(k),k} - 2\,flag1_{pos(k),k}\text{sign}(step_{pos(k),k})$ endif

**4.11** if $\alpha_{pos(k),k} + step_{pos(k),k} < -M'+1$ or $\alpha_{pos(k),k} + step_{pos(k),k} > M'-1$,

**4.12** if $flag1_{pos(k),k} \neq 0$, $flag1_{pos(k),k} = 0$, $step_{pos(k),k} = 2_{sign}(step_{pos(k),k})$

**4.13** else $flag_{pos(k),k} = 1$ endif

**4.14** if $\alpha_{pos(k),k} + step_{pos(k),k} < -M'+1$ or $\alpha_{pos(k),k} + step_{pos(k),k} > M'-1$,

**4.15** $flag_{pos(k),k} = 1$ endif endif

**4.16** $\alpha_{pos(k)} = \alpha_{pos(k),k}$, $A_{.,k} = \alpha_{pos(k)}\mathbf{I}_{.,pos(k)}$

**4.17** $\boldsymbol{\rho} = \mathbf{E}_{.,k}^{(k)} - \alpha_{pos(k)}\mathbf{R}_{.,pos(k)}^{(k,k)}$, ¿go to Step 2

Subroutine de compétition de liste :

$list\_compete$(input : $\mathbf{E}$, $\mathbf{R}$, $M'$; output : $pos$, $amp$, $\alpha$, $\widetilde{\alpha}$, $\mathbf{d}$)

**Step 1 :** $\mathbf{E_1} = \mathbf{R^T E}$, $\widetilde{\mathbf{E}}_1 = \mathbf{diag(E_1)}$

**Step 2 :** $\mathbf{E_2} = \mathbf{Diag(R^T R)}$, $\widetilde{\mathbf{E}}_2 = \mathbf{diag(E_2)}$

**Step 3 :** $\widetilde{\alpha} = \mathbf{Diag}(\widetilde{\mathbf{E}}_1\,(\widetilde{\mathbf{E}}_2)^{-1})$

**Step 4 :** for $m = 1,..,M$ $\alpha_m = 2\text{Round}\left(\dfrac{\tilde{\alpha}_m + M'-1}{2}\right) - M'+1$

**Step 5 :** $\alpha_m = \max(1-M',\alpha_m)$ ; $\alpha_m = \min(M'-1,\alpha_m)$ endfor

**Step 6 : d = -2Diag($\tilde{E}_1$diag($\alpha$))+ Diag($\tilde{E}_2$(diag($\alpha$))$^2$)**

**Step 7 :** $pos = \arg\min_m (d_m)$ ; $amp = \alpha_{pos}$

**Revendications**

1. Procédé de décodage par sphère pour récepteur à maximum de vraisemblance destiné à recevoir des symboles PPM-PAM d'une pluralité $P$ de sources, chaque source émettant un flux de symboles PPM-PAM à $M$ positions et à $M'$ amplitudes de modulation, $P$ symboles PPM-PAM émis simultanément par les P sources étant représentés par un point (**a**) de la constellation de modulation produit dans un espace des signaux transmis de dimension $MP$. décomposé en $P$ couches, chaque couche représentant les $M$ positions de modulation possibles et en chacune de ces positions les $M'$ amplitudes possibles d'un symbole PPM-PAM émis par cette source, le signal reçu (**x**) par ledit récepteur étant transformé en un point représentatif (**z**) de ce signal, dit point reçu, dans l'espace des signaux transmis, ledit procédé déterminant le point de la constellation produit le plus proche (**â$_{opt}$**) du point reçu à l'intérieur d'une sphère de rayon quadratique donné, **caractérisé en ce que**, pour chaque couche de rang $p$ :

   (a) on effectue une égalisation ZF-DFE du signal reçu dans ladite couche compte tenu des symboles PPM-PAM estimés dans les $P-p$ couches précédentes, dites couches supérieures à la couche $p$;
   (b) on sélectionne un symbole PPM-PAM de cette couche :

   (b1) en classant, pour chaque position PPM de ladite couche, la liste ( $L_m^p$ ) des symboles PAM en cette position, en fonction des contributions qu'ils apporteraient à la distance quadratique au point reçu et en retenant pour chaque liste le symbole PAM réalisant la plus faible contribution, dit champion de liste;
   (b2) en sélectionnant la position PPM $(pos(p))$ réalisant la plus faible contribution $(d_p)$ et en sélectionnant comme symbole PPM-PAM $(\alpha_{pos(p)}\delta(m-pos(p)))$ le champion de la liste en la position ainsi déterminée ;

   (c) on ajoute cette contribution à celles obtenues pour les couches précédentes pour obtenir une somme de contributions $(\sigma_p)$ ;

   les étapes (a),(b),(c) étant répétées jusqu'à ce que l'on atteigne la couche la plus basse ; et
   l'on met à jour le rayon quadratique de la sphère et ledit point le plus proche si ladite somme de contributions est inférieure au rayon quadratique de la sphère.

2. Procédé de décodage par sphère selon la revendication 1, **caractérisé en ce qu'**au sein de l'étape (b) l'étape (b2) est suivie d'une étape (b3) dans laquelle on choisit comme nouveau champion de la liste relative à la position sélectionnée le symbole PAM suivant de cette liste.

3. Procédé de décodage par sphère selon la revendication 2, **caractérisé en ce que**, si pour une couche donnée et un symbole PPM-PAM sélectionné dans cette couche, ladite somme des contributions excède le rayon quadratique de la sphère, on passe à la couche supérieure et on sélectionne un nouveau symbole PPM-PAM dans cette couche selon l'étape (b).

4. Procédé de décodage par sphère selon la revendication 3, **caractérisé en ce que** si tous les symboles de ladite couche supérieure ont déjà fait l'objet d'une sélection, on passe à la couche encore supérieure pour y sélectionner un nouveau symbole PPM-PAM selon l'étape (b).

5. Procédé de décodage par sphère selon la revendication 3 ou 4, **caractérisé en ce que** si l'on a atteint la couche la plus haute et que, soit l'on a sélectionné tous les symboles PPM-PAM de ladite couche, soit la contribution de ladite couche calculée pour le symbole sélectionné excède le rayon quadratique de la sphère, le procédé de décodage se termine en fournissant ledit point le plus proche ($\hat{\mathbf{a}}_{\mathbf{opt}}$).

6. Procédé de décodage par sphère selon la revendication 5, **caractérisé en ce que** les symboles PPM-PAM des sources de rangs respectifs 1,..,*P*, estimés au sens du maximum de vraisemblance, sont obtenus comme sous-vecteurs ( $\hat{\mathbf{a}}_{\mathbf{opt}}^{(1)}$ , $\hat{\mathbf{a}}_{\mathbf{opt}}^{(2)}$ , . . $\hat{\mathbf{a}}_{\mathbf{opt}}^{(P)}$ ) à *M* composantes du vecteur à *MP* composantes représentant ledit point le plus proche ($\hat{\mathbf{a}}_{\mathbf{opt}}$).

7. Procédé de décodage par sphère selon l'une des revendications précédentes, **caractérisé en ce que** pour une couche de rang *p* donnée et une position PPM *m* de cette couche, ladite liste relative à cette position est, après classement :

$$\alpha_m \quad ; \quad \alpha_m + 2\Delta_m \quad ; \quad \alpha_m - 2\Delta_m \quad ; \quad \alpha_m + 4\Delta_m \quad ; \quad \alpha_m - 4\Delta_m \quad ; ...$$

avec $\Delta_m = sign(\tilde{\alpha}_m - \alpha_m)$ où $\tilde{\alpha}_m$ est une valeur réelle représentative du signal reçu en position *m*, après égalisation de la source *p*, et $\alpha_m$ l'entier le plus proche de $\tilde{\alpha}_m$, correspondant à une amplitude de la constellation PAM.

8. Procédé de décodage par sphère selon la revendication 7, **caractérisé en ce que** la valeur réelle représentative du signal reçu en position *m*, après égalisation de la source *p* est obtenue par :

$$\tilde{\alpha}_{\mathbf{m}} = \frac{\left(\mathbf{R}_{.,\mathbf{m}}^{(\mathbf{p},\mathbf{p})}\right)^{\mathbf{T}} \mathbf{E}^{(\mathbf{p})}}{\left(\mathbf{R}_{.,\mathbf{m})}^{(\mathbf{p},\mathbf{p})}\right)^{\mathbf{T}} \mathbf{R}_{.,\mathbf{m}}^{(\mathbf{p},\mathbf{p})}}$$

où $\mathbf{R}^{(\mathbf{p},\mathbf{p})}$ est la *p*ième sous-matrice de taille $M{\times}M$ sur la diagonale de la matrice triangulaire supérieure $\mathbf{R}$ de taille $MP{\times}MP$, obtenue par transformation QR d'une matrice $\mathbf{H}$ représentative du canal de transmission entre les *P* sources et ledit récepteur ;

$\mathbf{R}_{.,\mathbf{m}}^{(\mathbf{p},\mathbf{p})}$ est la m^ième colonne de la matrice $\mathbf{R}^{(\mathbf{p},\mathbf{p})}$ ; et

$\mathbf{E}^{(\mathbf{p})} = \mathbf{R}^{(\mathbf{p},\mathbf{p})}\mathbf{e}_{\mathbf{p}}^{(\mathbf{p})}$ où $\mathbf{e}_{\mathbf{p}}^{(\mathbf{p})}$ représente le signal reçu de la source *p* après égalisation ZF-DFE.

9. Récepteur à maximum de vraisemblance destiné à recevoir des symboles PPM-PAM d'une pluralité P de sources, comprenant un filtre adapté au canal de transmission entre les sources et le récepteur et, le cas échéant, au codage spatio-temporel utilisé à l'émission, **caractérisé en ce qu'**il comprend en outre un décodeur par sphère comprenant des moyens adaptés à exécuter les étapes du procédé de décodage par sphère selon l'une des revendications précédentes, le décodeur par sphère recevant en entrée la sortie dudit filtre adapté.

**Claims**

1. Sphere decoding method for a maximum likelihood receiver for receiving PPM-PAM symbols from a plurality *P* of sources, each source emitting a flow of PPM-PAM symbols with *M* positions and *M'* modulation amplitudes, *P* PPM-PAM symbols sent simultaneously by the *P* sources being represented by a point (a) of the modulation product constellation in a space of transmitted signals of dimension *MP*, decomposed into *P* layers, each layer representing the *M* possible modulation positions, and in each of these positions the *M'* possible amplitudes of a PPM-PAM symbol emitted by this source, the signal (x) received by the said receiver being transformed into a point (z) representing this signal, referred to as the received point, in the space of the transmitted signals, said method determining the point of the product constellation ($\hat{a}_{opt}$) closest to the received point within a sphere of given quadratic radius, **characterised in that**, for each layer of rank $p$:

(a) a ZF-DFE equalization of the signal received in the said layer is carried out taking account of the PPM-PAM symbols estimated in the preceding $P$-$p$ layers, referred to as layers higher than the layer $p$;
(b) a PPM-PAM symbol from this layer is selected:

(b1) by classifying, for each PPM position of the said layer, the list $(\mathbf{L}_m^p)$ of the PAM symbols in this position, as a function of the contributions which they would make to the quadratic distance to the received point, and by retaining for each list the PAM symbol which provides the smallest contribution, referred to as the champion of the list;
(b2) by selecting the PPM position $(pos\ (p))$ making the smallest contribution $(d_p)$ and selecting as PPM-PAM symbol $(\alpha_{pos(p)}\delta(m\text{-}pos(p)))$ the champion of the list in the position thus determined;

(c) this contribution is then added to those obtained for the preceding layers in order to obtain a sum of contributions ($\sigma_p$);
the steps (a), (b), (c) being repeated until the lowest layer is reached; and
the quadratic radius of the sphere and said closest point are updated, if said sum of contributions is lower than the quadratic radius of the sphere.

2. Sphere decoding method according to Claim 1, **characterised in that**, within step (b), step (b2) is followed by a step (b3), in which there is chosen, as the new champion of the list relative to the selected position, the PAM symbol following this list.

3. Sphere decoding method according to Claim 2, **characterised in that**, if for a given layer and a PPM-PAM symbol selected in this layer, said sum of contributions exceeds the quadratic radius of the sphere, then one passes to the upper layer and a new PPM-PAM symbol is selected in this layer in accordance with step (b).

4. Sphere decoding method according to Claim 3, **characterised in that**, if all the symbols of said upper layer have already been selected, the decoding method moves on to the layer above and selects there a new PPM-PAM symbol in accordance with step (b).

5. Sphere decoding method according to Claim 3 or 4, **characterised in that**, if the highest layer has been reached and, if either all the PPM-PAM symbols of the said layer have been selected or the contribution of the said layer calculated for the selected symbol exceeds the quadratic radius of the sphere, the decoding process ends by providing said closest point ($\hat{a}_{opt}$).

6. Sphere decoding method according to Claim 5, **characterised in that** the PPM-PAM symbols of the sources of the respective ranks $1,...,P$, estimated in the sense of the maximum likelihood, are obtained as $M$-components sub-vectors $(\hat{a}_{opt}^{(1)}, \hat{a}_{opt}^{(2)}, ..., \hat{a}_{opt}^{(P)})$ of the $MP$-components vector representing said closest point ($\hat{a}_{opt}$).

7. Sphere decoding method according to any one of the preceding claims, **characterised in that**, for a given layer of row p and a PPM position m of this layer, said list relative to this position is, after classification:

$$\alpha_m;\ \alpha_m + 2\Delta_m;\ \alpha_m - 2\Delta_m;\ \alpha_m + 4\Delta_m;\ \alpha_m - 4\Delta_m;\ ...$$

with $\Delta_m = sign(\tilde{\alpha}\text{-}\alpha_m)'$, where $\tilde{\alpha}_m$ is a real value representative of the signal received at the position m, after equalization of the source $p$, and $\alpha_m$ being the nearest integer to $\tilde{\alpha}_m$, corresponding to an amplitude of the PAM constellation.

8. Sphere decoding method according to Claim 7, **characterised in that** the real value which is representative of the signal received at the position m, after equalization of the source $p$, is obtained by:

$$\tilde{\alpha}_m = \frac{\left(R_{.,m}^{(p,p)}\right)^T E^{(p)}}{\left(R_{.,m}^{(p,p)}\right)^T R_{.,m}^{(p,p)}}$$

where $R^{(p,p)}$ is the $p^{th}$ sub-matrix of size *M x M* on the diagonal of the upper triangular matrix **R** of size *MP x MP*, obtained by QR transformation of a matrix H representative of the transmission channel between the *P* sources and the said receiver;

$R_{.,m}^{(p,p)}$ is the m$^{th}$ column of the matrix $R^{(p,p)}$; and

$E^{(p)} = R^{(p,p)}e^{(p)}_p$ where $e_p^{(p)}$ represents the signal received from the source *p* after ZF-DFE equalization.

9. Maximum likelihood receiver for receiving PPM-PAM symbols from a plurality *P* of sources, comprising a filter matched to the transmission channel between the sources and the receiver and, if necessary, to the spatial-temporal coding used at the emission, **characterised in that** it further comprises a sphere decoder comprising means adapted to carry out the steps of the method of the sphere decoding method according to any one of the preceding claims, the sphere decoder receiving as input the output of said matched filter.

**Patentansprüche**

1. Verfahren zum sphärischen Decodieren für einen Empfänger mit maximaler Wahrscheinlichkeit, der dazu vorgesehen ist, PPM-PAM Symbole einer Mehrzahl *P* von Quellen zu empfangen, wobei jede Quelle einen Fluss von PPM-PAM Symbolen mit *M* Positionen und *M'* Modulationsamplituden emittiert, wobei *P* PPM-PAM Symbole, die durch die *P* Quellen gleichzeitig emittiert werden, durch einen Punkt (a) der Produktmodulationskonstellation repräsentiert werden, die in einem Raum gesendeter Signale mit Dimension *MP*, der in *P* Schichten zerlegt ist, wobei jede Schicht die *M* möglichen Modulationspositionen und an jeder dieser Positionen die *M'* möglichen Amplituden eines von dieser Quelle emittierten PPM-PAM Symbols repräsentiert, wobei das durch den Empfänger empfangene Signal (x) in dem Raum gesendeter Signale in einen für dieses Signal repräsentativen Punkt (**z**), der empfangener Punkt genannt wird, transformiert wird, wobei das Verfahren den Punkt (â$_{opt}$) der erzeugten Konstellation, der sich am nächsten bei dem empfangenen Punkt innerhalb einer Sphäre mit gegebenem quadratischen Radius befindet, bestimmt, **dadurch gekennzeichnet, dass** für jede Schicht mit Rang *p*:

   (a) eine ZF-DFE Glättung des empfangenen Signals in der Schicht unter Berücksichtigung der Symbole PPM-PAM erfolgt, die in den *P - p* vorhergehenden Schichten, die obere Schichten der Schicht *p* genannt werden, geschätzt werden;
   (b) ein PPM-PAM Symbol dieser Schicht ausgewählt wird:

   (b1) indem für jede PPM Position der Schicht die Liste $\left( L_m^p \right)$ der Symbole PAM an dieser Position in Abhängigkeit von den Beiträgen, die sie zu dem quadratischen Abstand zu dem empfangenen Punkt beitragen würden, klassifiziert wird und indem für jede Liste das PAM Symbol, das den geringsten Beitrag bewirkt und Spitzenreiter der Liste genannt wird, beibehalten wird;
   (b2) indem die Position PPM (*pos(p)*) ausgewählt wird, die den geringsten Beitrag ($d_p$) bewirkt, und indem als PPM-PAM Symbol ($\alpha_{pos(p)}\delta(m - pos(p))$) der Spitzenreiter der Liste an der somit bestimmten Position ausgewählt wird;

   (c) dieser Beitrag zu jenen hinzugefügt wird, die für die vorhergehenden Schichten erhalten wurden, um eine Summe ($\sigma_p$) von Beiträgen zu erhalten;

   wobei die Schritte (a), (b), (c) wiederholt werden, bis die niedrigste Schicht erreicht wird; und
   der quadratische Radius der Sphäre und der nächste Punkt aktualisiert werden, falls die Summe der Beiträge kleiner als der quadratische Radius der Sphäre ist.

2. Verfahren zum sphärischen Decodieren nach Anspruch 1, **dadurch gekennzeichnet, dass** im Schritt (b) dem Schritt (b2) ein Schritt (b3) folgt, in dem als neuer Spitzenreiter der Liste relativ zu der ausgewählten Position das PAM Symbol, das in dieser Liste folgt, gewählt wird.

3. Verfahren zum sphärischen Decodieren nach Anspruch 2, **dadurch gekennzeichnet, dass** dann, wenn für eine gegebene Schicht und ein in dieser Schicht ausgewähltes PPM-PAM Symbol die Summe der Beiträge den quadratischen Radius der Sphäre übersteigt, zu der oberen Schicht übergegangen wird und ein neues PPM-PAM Symbol in dieser Schicht gemäß dem Schritt (b) ausgewählt wird.

4. Verfahren zum sphärischen Decodieren nach Anspruch 3, **dadurch gekennzeichnet, dass** dann, wenn alle Symbole der oberen Schicht bereits Gegenstand einer Auswahl waren, zu der noch höheren Schicht übergegangen wird, um hier ein neues PPM-PAM Symbol gemäß dem Schritt (b) auszuwählen.

5. Verfahren zum sphärischen Decodieren nach Anspruch 3 oder 4, **dadurch gekennzeichnet, dass** dann, wenn die höchste Schicht erreicht ist und entweder alle PPM-PAM Symbole der Schicht ausgewählt worden sind oder der Beitrag der Schicht, der für das ausgewählte Symbol berechnet wird, den quadratischen Radius der Sphäre übersteigt, das Decodierungsverfahren endet und den nächsten Punkt ($\hat{a}_{opt}$) liefert.

6. Verfahren zum sphärischen Decodieren nach Anspruch 5, **dadurch gekennzeichnet, dass** die PPM-PAM Symbole der Quellen mit jeweiligem Rang 1, ..., $P$, die im Sinne der maximalen Wahrscheinlichkeit geschätzt werden, als Untervektoren $\left(\hat{a}_{opt}^{(1)}, \hat{a}_{opt}^{(2)}, ..., \hat{a}_{opt}^{(P)}\right)$ mit $M$ Komponenten des Vektors mit $MP$ Komponenten, der den nächsten Punkt ($\hat{a}_{opt}$) repräsentiert, erhalten werden.

7. Verfahren zum sphärischen Decodieren nach einem der vorhergehenden Ansprüche, **dadurch gekennzeichnet, dass** für eine gegebene Schicht mit Rang p und eine PPM Position m dieser Schicht die Liste bezüglich dieser Position nach der Klassifizierung lautet:

$$\alpha_m;\ \alpha_m + 2\Delta_m;\ \alpha_m - 2\Delta_m;\ \alpha_m\ + 4\Delta_m;\ \alpha_m - 4\Delta_m;\ ...$$

mit $\Delta_m = sign(\tilde{\alpha} - \alpha_m)$, wobei $\tilde{\alpha}_m$ ein reeller Wert ist, der das empfangene Signal an der Position $m$ nach Glättung der Quelle $p$ repräsentiert und $\alpha_m$ die nächste ganze Zahl von $\tilde{\alpha}_m$ ist und einer Amplitude der Konstellation PAM entspricht.

8. Verfahren zum sphärischen Decodieren nach Anspruch 7, **dadurch gekennzeichnet, dass** der reelle Wert, der das empfangene Signal an der Position $m$ repräsentiert, nach Glättung der Quelle p erhalten wird durch:

$$\tilde{\alpha}_m = \frac{\left(R_{.,m}^{(p,p)}\right)^T E^{(p)}}{\left(R_{.,m}^{(p,p)}\right)^T R_{.,m}^{(p,p)}}$$

wobei $R^{(p,p)}$ die p-te Untermatrix mit Größe $M \times M$ auf der Diagonalen der oberen Dreiecksmatrix R mit Größe $MP \times MP$, die durch QR-Transformation einer Matrix H erhalten wird, die den Übertragungskanal zwischen den $P$ Quellen und dem Empfänger repräsentiert, ist;

$R_{.,m}^{(p,p)}$ die m-te Spalte der Matrix $R^{(p,p)}$ ist; und

$E^{(p)} = R^{(p,p)}e^{(p)}_p$, wobei $e^{(p)}_p$ das empfangene Signal von der Quelle p nach der ZF-DFE Glättung repräsentiert.

9. Empfänger mit maximaler Wahrscheinlichkeit, der dazu vorgesehen ist, PPM-PAM Symbole einer Mehrzahl P von Quellen zu empfangen, der ein Filter umfasst, das an den Übertragungskanal zwischen den Quellen und dem Empfänger und gegebenenfalls an die bei der Emission verwendete raumzeitliche Codierung angepasst ist, **dadurch gekennzeichnet, dass** er außerdem einen sphärischen Decodierer umfasst, der Mittel enthält, die dazu ausgelegt sind, die Schritte des Verfahrens zum sphärischen Decodieren nach einem der vorhergehenden Ansprüche auszuführen, wobei der sphärische Decodierer am Eingang die Ausgabe des angepassten Filters empfängt.

**Fig. 1**

$$i = P \qquad T_P = 0$$
$$E_P = 0 \qquad d = D$$
*210*

$T_i > d\,?$ *220*

*223* $i = P$ *225* $\hat{a}$

$i = i + 1$ *227*

*230*
$$A_i \qquad B_i$$
$$a_i = A_i - 2$$

*240*
$$a_i = a_i + 2$$

*250* $a_i \leq B_i\ ?$

*263*
$$T_{i-1} = T_i + \left| z_i - E_i - r_{i,i} a_i \right|^2$$
$$E_{i-1}$$
$$i = i - 1$$

*260* $i = 1\,?$

*270*
$$\hat{d} = T_1 + \left| z_1 - E_1 - r_{1,1} a_1 \right|^2$$

*280* $\hat{d} < d$

*290*
$$d = \hat{d} \qquad \hat{a} = a$$

**Fig. 2**

24

**Fig. 3**

Node 310:
$$i = P \qquad T_P = 0$$
$$\xi_P = 0 \qquad d = D$$

Node 320:
$$e_i = (z_i - \xi_i)/r_{ii}$$
$$\hat{e}_i = round(e_i)$$
$$\delta_i = \mathrm{sgn}(e_i - \hat{e}_i)$$

Node 330:
$$T_i + r_{ii}(a_i - e_i)^2 < d \quad ?$$

Node 340:
$$|a_i| \leq M'-1$$

Node 350:
$$i = P$$

Node 355:
$$\hat{a}$$

Node 345:
$$i = 1$$

Node 347:
$$\xi_{i-1} = \sum_{j=i}^{P} r_{i-1,j}\, a_j$$
$$T_{i-1} = T_i + r_{ii}(a_i - e_i)^2$$
$$i = i - 1$$

Node 360:
$$\hat{d} = T_1 + r_{11}^2(a_1 - e_1)^2 < d$$

Node 365:
$$d = \hat{d} \qquad \hat{a} = a$$

Node 370:
$$i = i + 1$$

Node 380:
$$\delta_i = -\delta_i - 2\,\mathrm{sgn}(\delta_i)$$
$$a_i = a_i + \delta_i$$

**Fig. 4A**

**Fig. 4B**

**Fig. 5**

**Fig. 6**

**Fig. 7**

## RÉFÉRENCES CITÉES DANS LA DESCRIPTION

**Littérature non-brevet citée dans la description**

- **J.G. PROAKIS.** Digital communications. 242-247
- **E. Viterbo et al.** A universal lattice code decoder for fading channels. *IEEE Transactions on Information Theory,* Juillet 1999, vol. 45, 1639-1642
- **C. Abou-Rjeily et al.** Space-time coding for multiuser ultra-wideband communications. *IEEE Trans. on Comm.,* 2006, vol. 54 (11), 1960-1972
- **M.O. DAMEN et al.** On Maximum-Likelihood detection and the search for the closest lattice point. *IEEE Trans. on Information Theory,* Octobre 2003, vol. 49 (10), 2389-2402